# EUROPEAN PATENT SPECIFICATION

(11) **EP 3 499 969 B1**
(45) Date of publication and mention of the grant of the patent: **27.10.2021**
(21) Application number: 17850163.1
(22) Date of filing: 16.08.2017
(51) Int. Cl.: H04W 40/02, H04W 40/04

(54) **DATA TRANSMISSION METHOD AND RELAY NODE**
DATENÜBERTRAGUNGSVERFAHREN UND RELAISKNOTEN
PROCÉDÉ DE TRANSMISSION DE DONNÉES, ET NOEUD RELAIS

(30) Priority: 18.09.2016 CN 201610826833
(43) Date of publication of application: 19.06.2019
(73) Proprietor: Huawei Technologies Co., Ltd., Longgang District Shenzhen, Guangdong 518129 (CN)
(72) Inventor: JIA, Jia, Shenzhen Guangdong 518129 (CN); LI, Yunbo, Shenzhen Guangdong 518129 (CN); GUO, Yuchen, Shenzhen Guangdong 518129 (CN)
(74) Representative: Maiwald Patent- und Rechtsanwaltsgesellschaft mbH
(86) International application number: PCT/CN2017/097666
(87) International publication number: WO 2018/049961

(56) References cited:
- WO-A1-2008/096909
- CN-A- 101 483 893
- CN-A- 103 327 558
- CN-A- 103 327 559
- US-A1- 2005 138 200
- US-A1- 2009 190 521
- US-A1- 2012 071 085

## Description

### TECHNICAL FIELD

Embodiments of this application relate to communications technologies, and in particular, to a data transmission method and a relay node.

### BACKGROUND

WO2008/096909A1 describes that an apparatus for setting a routing path includes a logical processing part, a hardware processing part and an antenna. The logical processing part includes a sensing device and a memory. The hardware processing part includes a neighbor node information managing module that manages a neighbor node. The antenna wirelessly connects to an external node and the hardware processing part. The logical processing part and the hardware processing part finally receive a packet from the external node in a destination node operation, and search for a first neighbor nodes in a source node operation, to transmit the packet to the nearest node of the destination node of the first neighbor node when the destination node is not included in the first neighbor node. Therefore, it is described that it may be possible to perform hierarchical routing by using a short address dynamically assigned thereto in a wireless sensor network.

As a currently popular wireless network, a tree (Tree) network can be widely applied in the Institute of Electrical and Electronics Engineers (Institute of Electrical and Electronics Engineers, IEEE) 802.11ah. A structure of the tree network is derived from a most basic star (Star) network structure in the wireless network, and the star network structure is a most basic structure in a current Wireless Fidelity (Wireless Fidelity, Wi-Fi) network. As a root node (Root Node) in a star network, an access point (Access Point, AP) is responsible for data exchange between the access point and a station (Station, STA) associated with the access point, data transmission between the station and a distributed system (Distributed System, DS), and communication relay between stations.

The tree network is an extension of the star network, and at least one relay (Relay) node may be disposed between an access point serving as a root node (Root Node) in the tree network and a station serving as a child node in the tree network, to enlarge a coverage area of the wireless network and improve data transmission efficiency. In the tree network, communication can be performed only between a parent node and a child node. Therefore, when a message is transmitted between any two stations in the network, a transmit node needs to report the message to a parent node of the transmit node, and the parent node of the transmit node reports the message level by level until the message arrives at a root node. Then the root node selects, based on a destination address (Destination Address, DA), a child node to which the message is to be delivered, and delivers the message level by level until the message arrives at a target node.

Obviously, a plurality of levels of relay nodes are required when the coverage area of the network is relatively large, and consequently, a data transmission path between two stations is overlong, and extra network overheads are caused.

### SUMMARY

Embodiments of this application provide a data transmission method and a relay node, to shorten a data transmission path and reduce network overheads in a data transmission process.

In a first aspect, there is provided a data transmission method as defined in appended claim 1. In a second aspect, there is provided a first relay node as defined in appended claim 7. In a third aspect, there is provided a computer-readable medium as defined in appended claim 13.

According to one example, this application provides a data transmission method, including:
receiving, by a first relay node, data;
determining, by the first relay node, a target station of the data based on information about a neighboring node of the first relay node; and
sending, by the first relay node, the data to the target station.

In the data transmission method, the first relay node may receive the data, determine the target station of the data based on the information about the neighboring node of the first relay node, and send the data to the target station. Therefore, the data does not need to be reported to an access point level by level, and the access point does not need to transmit the data to the target station level by level. In this way, a data transmission path is effectively shortened, and efficiency of data transmission between stations is improved, thereby effectively reducing network overheads in a data transmission process.

In addition, a station in the data transmission method can transmit data merely by using a parent node of the station. Therefore, the station does not need to obtain information about each node in a wireless network system, does not need to explore a path or establish a network, and does not need to store any routing table. In this way, power consumption and hardware complexity of the station are effectively reduced.

In a possible implementation, the information about the neighboring node of the first relay node includes information about all stations associated with the first relay node; and the sending, by the first relay node, the data to the target station includes:
directly sending, by the first relay node, the data to the target station if the target station is a station associated with the first relay node.

In another possible implementation, the information about the neighboring node of the first relay node further includes information about a second relay node directly connected to the first relay node, and the information about the second relay node includes information about all stations associated with the second relay node; and
the sending, by the first relay node, the data to the target station includes:
sending, by the first relay node, the data to the second relay node if the target station is a station associated with the second relay node, so that the second relay node sends the data to the target station.

In the data transmission method, the data does not need to be reported to the access point level by level, and the access point does not need to transmit the data to the target station level by level regardless of whether the target station of the data is the station associated with the first relay node. In this way, a data transmission path between stations can be effectively shortened.

In still another possible implementation, before the determining, by the first relay node, a target station of the data based on information about a neighboring node of the first relay node, the method further includes:
sending, by the first relay node, a connection request to the second relay node; and
receiving, by the first relay node, a connection response sent by the second relay node, where a routing table exchange information element of the connection response includes the information about the second relay node.

In the data transmission method, the implementation in which the first relay node obtains the information about the second relay node is provided, so that the first relay node can determine the target station based on the information about the neighboring node of the first relay node, namely, the information about the second relay node, to perform data transmission and implement effective data transmission between stations. In this way, a data transmission path between stations is effectively shortened, and network overheads in a data transmission process are reduced.

In yet another possible implementation, the sending, by the first relay node, a connection request to the second relay node includes:
determining, by the first relay node based on a direct connection capability information element of the second relay node, whether the first relay node and the second relay node are matched for connection; and
sending, by the first relay node, the connection request to the second relay node if the first relay node and the second relay node are matched for connection.

In the data transmission method, the first relay node may send the first connection request to the second relay node when determining that the first relay node and the second relay node are matched for connection. In this way, a success rate of a direct connection between the first relay node and the second relay node can be improved, and power consumption of a relay node in a direct connection process can be reduced.

In yet another possible implementation, the direct connection capability information element includes a direct connection permit identifier of the second relay node, a quantity of relay nodes that are permitted to be directly connected to the second relay node, and a quantity of relay nodes that have been directly connected to the second relay node; and
before the sending, by the first relay node, the connection request to the second relay node if the first relay node and the second relay node are matched for connection, the method further includes:
determining, by the first relay node if the first relay node determines, based on the direct connection permit identifier of the second relay node, that the second relay node is permitted to be directly connected, and the quantity of relay nodes that are permitted to be directly connected is greater than the quantity of relay nodes that have been directly connected, that the first relay node and the second relay node are matched for connection.

In yet another possible implementation, the direct connection capability information element includes a transmission rate of the second relay node; and
the determining, by the first relay node if the first relay node determines, based on the direct connection permit identifier of the second relay node, that the second relay node is permitted to be directly connected, and the quantity of relay nodes that are permitted to be directly connected is greater than the quantity of relay nodes that have been directly connected, that the first relay node and the second relay node are matched for connection includes:
if the first relay node determines, based on the direct connection permit identifier of the second relay node, that the second relay node is permitted to be directly connected, the quantity of relay nodes that are permitted to be directly connected is greater than the quantity of relay nodes that have been directly connected, and a transmission rate difference is within a preset range, determining, by the first relay node, that the first relay node and the second relay node are matched for connection, where the transmission rate difference is a difference between a transmission rate of the first relay node and the transmission rate of the second relay node.

In yet another possible implementation, the information about the second relay node further includes attribute information of the second relay node and attribute information of a relay group to which the second relay node belongs.

In yet another possible implementation, the attribute information of the second relay node includes an identifier of a first attribute type and information about a device connected to the second relay node, and the device connected to the second relay node includes a station associated with the second relay node and/or a relay node directly connected to the second relay node.

In yet another possible implementation, the information about the device connected to the second relay node includes a Medium Access Control MAC address of the device connected to the second relay node, a depth of the device connected to the second relay node, and a type of the device connected to the second relay node;
the type of the device connected to the second relay node is used to indicate that the device connected to the second relay node is the station associated with the second relay node or the relay node directly connected to the second relay node; and
if the type of the device connected to the second relay node is used to indicate that the device connected to the second relay node is a relay node directly connected to the second relay node, the information about the device connected to the second relay node further includes link quality indicator (LQI) of the second relay node.

In yet another possible implementation, the attribute information of the relay group to which the second relay node belongs includes an identifier of a second attribute type, a MAC address of a third relay node directly connected to the second relay node, and information about a device connected to the third relay node, and the device connected to the third relay node includes a station associated with the third relay node and/or a relay node directly connected to the third relay node.

In yet another possible implementation, the information about the device connected to the third relay node includes a MAC address of the device connected to the third relay node, a depth of the device connected to the third relay node, and a type of the device connected to the third relay node;
the type of the device connected to the third relay node is used to indicate that the device connected to the third relay node is the station associated with the third relay node or the relay node directly connected to the third relay node; and
if the type of the device connected to the third relay node is used to indicate that the device connected to the third relay node is the relay node directly connected to the third relay node, and the relay node directly connected to the third relay node has no associated station, the information about the device connected to the third relay node further includes an LQI of the third relay node.

In the foregoing data transmission method, a plurality of implementations of the information about the neighboring node of the first relay node, namely, the information about the second relay node directly connected to the first relay node, are further provided, so that the first relay node can obtain more complete and accurate information about the second relay node, and the first relay node can determine an optimum data transmission path based on the information about the neighboring node of the first relay node. In this way, efficiency of data transmission between stations is improved, and network overheads in a data transmission process are effectively reduced.

According to another example, this application further provides a relay node, including a receiver, a processor, and a transmitter, where the receiver is connected to the processor, and the processor is further connected to the transmitter;
the receiver is configured to receive data;
the processor is configured to determine a target station of the data based on information about a neighboring node of a first relay node; and
the transmitter is configured to send the data to the target station.

In a possible implementation, the information about the neighboring node of the first relay node includes information about all stations associated with the first relay node; and
the transmitter is specifically configured to directly send the data to the target station if the target station is a station associated with the first relay node.

In another possible implementation, the information about the neighboring node of the first relay node further includes information about a second relay node directly connected to the first relay node, and the information about the second relay node includes information about all stations associated with the second relay node; and
the transmitter is specifically configured to send the data to the second relay node if the target station is a station associated with the second relay node, so that the second relay node sends the data to the target station.

In still another possible implementation, the transmitter is further configured to send a connection request to the second relay node before the processor determines the target station of the data based on the information about the neighboring node of the first relay node; and
the receiver is further configured to receive a connection response sent by the second relay node, where a routing table exchange information element of the connection response includes the information about the second relay node.

In yet another possible implementation, the processor is further configured to determine, based on a direct connection capability information element of the second relay node, whether the first relay node and the second relay node are matched for connection; and
the transmitter is further configured to send the connection request to the second relay node if the first relay node and the second relay node are matched for connection.

In yet another possible implementation, the direct connection capability information element includes a direct connection permit identifier of the second relay node, a quantity of relay nodes that are permitted to be directly connected to the second relay node, and a quantity of relay nodes that have been directly connected to the second relay node; and
the processor is specifically configured to: if determining, based on the direct connection permit identifier of the second relay node, that the second relay node is permitted to be directly connected, and the quantity of relay nodes that are permitted to be directly connected is greater than the quantity of relay nodes that have been directly connected, determine that the first relay node and the second relay node are matched for connection.

In yet another possible implementation, the direct connection capability information element includes a transmission rate of the second relay node; and
the processor is specifically configured to: if determining, based on the direct connection permit identifier of the second relay node, that the second relay node is permitted to be directly connected, the quantity of relay nodes that are permitted to be directly connected is greater than the quantity of relay nodes that have been directly connected, and a transmission rate difference is within a preset range, determine that the first relay node and the second relay node are matched for connection, where the transmission rate difference is a difference between a transmission rate of the first relay node and the transmission rate of the second relay node.

In yet another possible implementation, the information about the second relay node further includes attribute information of the second relay node and attribute information of a relay group to which the second relay node belongs.

In yet another possible implementation, the attribute information of the second relay node includes an identifier of a first attribute type and information about a device connected to the second relay node, and the device connected to the second relay node includes a station associated with the second relay node and/or a relay node directly connected to the second relay node.

In yet another possible implementation, the information about the device connected to the second relay node includes a Medium Access Control MAC address of the device connected to the second relay node, a depth of the device connected to the second relay node, and a type of the device connected to the second relay node;
the type of the device connected to the second relay node is used to indicate that the device connected to the second relay node is the station associated with the second relay node or the relay node directly connected to the second relay node; and
if the type of the device connected to the second relay node is used to indicate that the device connected to the second relay node is a relay node directly connected to the second relay node, the information about the device connected to the second relay node further includes link quality indicator (LQI) of the second relay node.

In yet another possible implementation, the attribute information of the relay group to which the second relay node belongs includes an identifier of a second attribute type, a MAC address of a third relay node directly connected to the second relay node, and information about a device connected to the third relay node, and the device connected to the third relay node includes a station associated with the third relay node and/or a relay node directly connected to the third relay node.

In yet another possible implementation, the information about the device connected to the third relay node includes a MAC address of the device connected to the third relay node, a depth of the device connected to the third relay node, and a type of the device connected to the third relay node;
the type of the device connected to the third relay node is used to indicate that the device connected to the third relay node is the station associated with the third relay node or the relay node directly connected to the third relay node; and
if the type of the device connected to the third relay node is used to indicate that the device connected to the third relay node is the relay node directly connected to the third relay node, and the relay node directly connected to the third relay node has no associated station, the information about the device connected to the third relay node further includes an LQI of the third relay node.

According to still another example, this application further provides a data transmission apparatus, including:
a receiving module, configured to receive data;
a processing module, configured to determine a target station of the data based on information about a neighboring node of a first relay node; and
a sending module, configured to send the data to the target station.

In a possible implementation, the information about the neighboring node of the first relay node includes information about all stations associated with the first relay node; and
the sending module is specifically configured to directly send the data to the target station if the target station is a station associated with the first relay node.

In another possible implementation, the information about the neighboring node of the first relay node further includes information about a second relay node directly connected to the first relay node, and the information about the second relay node includes information about all stations associated with the second relay node; and
the sending module is specifically configured to send the data to the second relay node if the target station is a station associated with the second relay node, so that the second relay node sends the data to the target station.

In still another possible implementation, the sending module is further configured to send a connection request to the second relay node; and
the receiving module is further configured to receive a connection response sent by the second relay node, where a routing table exchange information element of the connection response includes the information about the second relay node.

In yet another possible implementation, the processing module is further configured to determine, based on a direct connection capability information element of the second relay node, whether the first relay node and the second relay node are matched for connection; and
the sending module is further configured to send the connection request to the second relay node if the first relay node and the second relay node are matched for connection.

In yet another possible implementation, the direct connection capability information element includes a direct connection permit identifier of the second relay node, a quantity of relay nodes that are permitted to be directly connected to the second relay node, and a quantity of relay nodes that have been directly connected to the second relay node; and
the processing module is specifically configured to: if determining, based on the direct connection permit identifier of the second relay node, that the second relay node is permitted to be directly connected, and the quantity of relay nodes that are permitted to be directly connected is greater than the quantity of relay nodes that have been directly connected, determine that the first relay node and the second relay node are matched for connection.

In yet another possible implementation, the direct connection capability information element includes a transmission rate of the second relay node; and
the processing module is specifically configured to: if determining, based on the direct connection permit identifier of the second relay node, that the second relay node is permitted to be directly connected, the quantity of relay nodes that are permitted to be directly connected is greater than the quantity of relay nodes that have been directly connected, and a transmission rate difference is within a preset range, determine that the first relay node and the second relay node are matched for connection, where the transmission rate difference is a difference between a transmission rate of the first relay node and the transmission rate of the second relay node.

In yet another possible implementation, the information about the second relay node further includes attribute information of the second relay node and attribute information of a relay group to which the second relay node belongs.

In yet another possible implementation, the attribute information of the second relay node includes an identifier of a first attribute type and information about a device connected to the second relay node, and the device connected to the second relay node includes a station associated with the second relay node and/or a relay node directly connected to the second relay node.

In yet another possible implementation, the information about the device connected to the second relay node includes a Medium Access Control MAC address of the device connected to the second relay node, a depth of the device connected to the second relay node, and a type of the device connected to the second relay node;
the type of the device connected to the second relay node is used to indicate that the device connected to the second relay node is the station associated with the second relay node or the relay node directly connected to the second relay node; and
if the type of the device connected to the second relay node is used to indicate that the device connected to the second relay node is a relay node directly connected to the second relay node, the information about the device connected to the second relay node further includes link quality indicator (LQI) of the second relay node.

In yet another possible implementation, the attribute information of the relay group to which the second relay node belongs includes an identifier of a second attribute type, a MAC address of a third relay node directly connected to the second relay node, and information about a device connected to the third relay node, and the device connected to the third relay node includes a station associated with the third relay node and/or a relay node directly connected to the third relay node.

In yet another possible implementation, the information about the device connected to the third relay node includes a MAC address of the device connected to the third relay node, a depth of the device connected to the third relay node, and a type of the device connected to the third relay node;
the type of the device connected to the third relay node is used to indicate that the device connected to the third relay node is the station associated with the third relay node or the relay node directly connected to the third relay node; and
if the type of the device connected to the third relay node is used to indicate that the device connected to the third relay node is the relay node directly connected to the third relay node, and the relay node directly connected to the third relay node has no associated station, the information about the device connected to the third relay node further includes an LQI of the third relay node.

According to the data transmission method and the relay node provided in the embodiments of this application, the first relay node may receive the data, determine the target station of the data based on the information about the neighboring node of the first relay node, and send the data to the target station. Therefore, the data does not need to be reported to an access point level by level, and the access point does not need to transmit the data to the target station level by level. In this way, a data transmission path is effectively shortened, and efficiency of data transmission between stations is improved, thereby effectively reducing network overheads in a data transmission process.

### BRIEF DESCRIPTION OF DRAWINGS

FIG. 1 is an architectural diagram of a wireless network system according to this application;
FIG. 2 is a flowchart of a data transmission method according to Embodiment 1 of this application;
FIG. 3 is a flowchart of a data transmission method according to Embodiment 2 of this application;
FIG. 4 is a flowchart of another data transmission method according to Embodiment 2 of this application;
FIG. 5 is a flowchart of still another data transmission method according to Embodiment 2 of this application;
FIG. 6 is a flowchart of yet another data transmission method according to Embodiment 2 of this application;
FIG. 7 is a flowchart of a data transmission method according to Embodiment 3 of this application;
FIG. 8 is a flowchart of another data transmission method according to Embodiment 3 of this application;
FIG. 9 is an architectural diagram of a wireless network system according to Embodiment 4 of this application;
FIG. 10 is a schematic structural diagram of a data transmission apparatus according to Embodiment 5 of this application; and
FIG. 11 is a schematic structural diagram of a relay node according to Embodiment 6 of this application.

### DESCRIPTION OF EMBODIMENTS

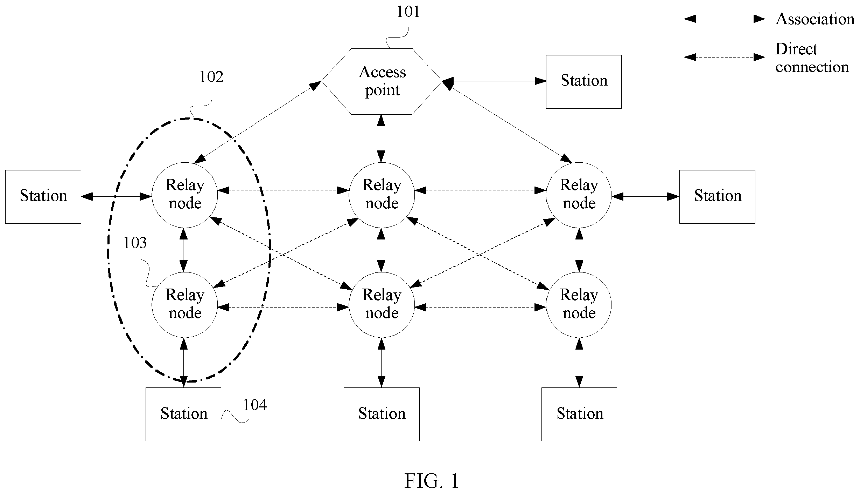

A data transmission method and apparatus, and a relay node provided in the following embodiments of this application are applicable to a wireless network system with a relatively large coverage area. FIG. 1 is an architectural diagram of a wireless network system according to this application. As shown in FIG. 1, the wireless network system includes an access point 101 and a plurality of relay groups 102. Each relay group 102 includes at least one successively connected relay node 103 and a station 104 associated with each relay node 103, and the access point 101 is connected to one relay node 103 in each relay group 102. Each relay node 102 in each relay group 102 may be associated with at least one station 104. Relay nodes 103 in adjacent relay groups 102 in the plurality of relay groups 102 are directly connected to each other. The access point 101 may also be associated with at least one station 104.

Each relay group 102 includes at least one relay node 103, and therefore the wireless network system may be a network system including at least one level of relay node. The access point 101 is a root node in the wireless network system, and is also referred to as a level-0 node. In each relay group 102, a relay node 103 connected to the access point 101 may be a level-1 node in the wireless network system. For example, if each relay group 102 includes two relay nodes 103, the wireless network system may be a network system including two levels of relay nodes; or if each relay group 102 includes three relay nodes 103, the wireless network system may be a network system including three levels of relay nodes. A direct connection between relay nodes 103 in adjacent relay groups 102 may be a device-to-device (Device-to-Device, D2D) direct connection between the relay nodes 103 in the adjacent relay groups 102.

The wireless network system shown in FIG. 1 is applicable to a remote transmission scenario in an Internet of Things (Internet Of Things, IOT) system, for example, a dock, a large commercial warehouse, or a special indoor high path loss environment.

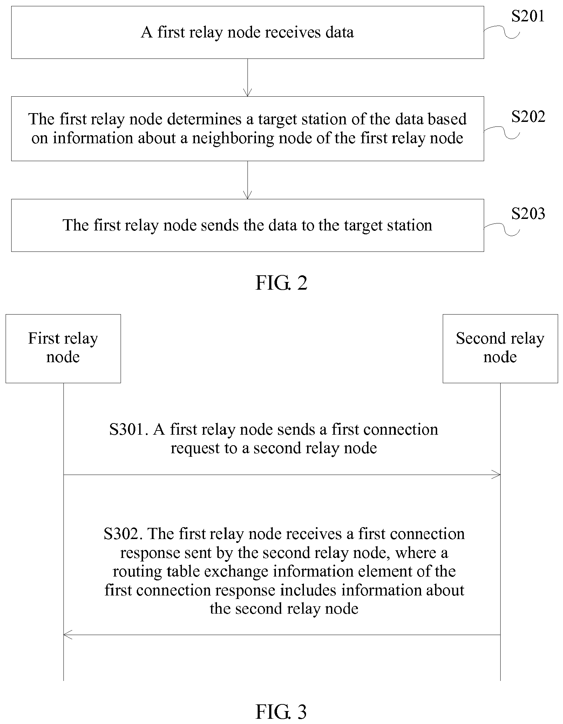

Embodiment 1 of this application provides a data transmission method. FIG. 2 is a flowchart of a data transmission method according to Embodiment 1 of this application. The data transmission method may be performed by any relay node 103 in the wireless network system shown in FIG. 1. As shown in FIG. 2, the data transmission method may include the following steps.

S201. A first relay node receives data.

Specifically, the first relay node may receive data sent by a station associated with the first relay node, or receive data sent by another relay node directly connected to the first relay node. If the first relay node receives the data sent by the station associated with the first relay node, the station may be a source station of the data.

S202. The first relay node determines a target station of the data based on information about a neighboring node of the first relay node.

Specifically, based on the wireless network system shown in FIG. 1, it can be learned that a neighboring node of each relay node may include a station associated with the relay node and/or a relay node directly connected to the relay node.

Therefore, the first relay node may determine, based on the information about the neighboring node of the first relay node and a destination address of the data, whether a station corresponding to the destination address is the station associated with the first relay node.

If the station corresponding to the destination address is the station associated with the first relay node, the station corresponding to the destination address is directly determined as the target station of the data, and the data is directly sent to the target station. If the station corresponding to the destination address is not the station associated with the first relay node, the first relay node further needs to determine, based on the information about the neighboring node of the first relay node and the destination address, a relay node associated with the station corresponding to the destination address, and transmits the data to the relay node associated with the station corresponding to the destination address, so that the relay node associated with the station corresponding to the destination address determines that the station corresponding to the destination address is the target station, and transmits the data to the target station.

In other words, in the data transmission method, the data does not need to be reported to an access point level by level, and the access point does not need to transmit the data to the target station level by level regardless of whether the target station of the data is the station associated with the first relay node. In this way, a data transmission path between stations can be effectively shortened.

S203. The first relay node sends the data to the target station.

In the data transmission method provided in Embodiment 1 of this application, the first relay node may receive the data, determine the target station of the data based on the information about the neighboring node of the first relay node, and send the data to the target station. Therefore, the data does not need to be reported to the access point level by level, and the access point does not need to transmit the data to the target station level by level. In this way, a data transmission path is effectively shortened, and efficiency of data transmission between stations is improved, thereby effectively reducing network overheads in a data transmission process.

In addition, a station in the data transmission method can transmit data merely by using a parent node of the station. Therefore, the station does not need to obtain information about each node in the wireless network system, does not need to explore a path or establish a network, and does not need to store any routing table. In this way, power consumption and hardware complexity of the station are effectively reduced.

Optionally, the information about the neighboring node of the first relay node includes information about all stations associated with the first relay node. That the first relay node sends the data to the target station in S203 may include:
the first relay node directly sends the data to the target station if the target station is a station associated with the first relay node.

Specifically, the first relay node may determine, based on the information about all the stations associated with the first relay node and the destination address of the data, whether the station corresponding to the destination address is the station associated with the first relay node. If the station corresponding to the destination address is the station associated with the first relay node, the first relay node determines that the target station is the station corresponding to the destination address in all the stations associated with the first relay node, and directly sends the data to the target station.

Alternatively, the information about the neighboring node of the first relay node further includes information about a second relay node directly connected to the first relay node, and the information about the second relay node includes information about all stations associated with the second relay node. That the first relay node sends the data to the target station in S203 may include:
the first relay node sends the data to the second relay node if the target station is a station associated with the second relay node, so that the second relay node sends the data to the target station.

Specifically, when determining that the target station is not the station associated with the first relay node, the first relay node may determine, based on the information about all the stations associated with the second relay node and the destination address of the data, whether the station corresponding to the destination address is the station associated with the second relay node. If the station corresponding to the destination address is the station associated with the second relay node, the first relay nod determines that the target station is the station corresponding to the destination address in all the stations associated with the second relay node, and sends the data to the second relay node. The second relay node sends the data to the target station.

Optionally, Embodiment 2 of this application provides a data transmission method. FIG. 3 is a flowchart of a data transmission method according to Embodiment 2 of this application. As shown in FIG. 3, before the first relay node determines the target station of the data based on the information about the neighboring node of the first relay node in S202, the method may further include:

S301. The first relay node sends a first connection request (Connection Request) to a second relay node.

S302. The first relay node receives a first connection response (Connection Response) sent by the second relay node, where a routing table exchange information element (Routing Table Exchange Information Element) of the first connection response includes information about the second relay node.

Specifically, the first connection request may be a D2D direct connection request, and the first connection response is a response corresponding to the D2D direct connection request. The first relay node may send the first connection request to the second relay node when the first relay node is associated with a new station, a station that has been associated with the first relay node is dissociated, the first relay node needs to establish a D2D direct connection to the second relay node, or the first relay node loses a direct connection to the second relay node.

It should be noted that, to ensure that the second relay node can obtain information about the first relay node, a routing table exchange information element of the first connection request may include the information about the first relay node, so that the second relay node performs data transmission based on the information about the first relay node.

In other words, the first relay node may actively initiate the connection request to the second relay node in a process of establishing a direct connection to the second relay node, to exchange information with the second relay node, so that the first relay node can obtain the information about the second relay node, and the second relay node can also obtain the information about the first relay node.

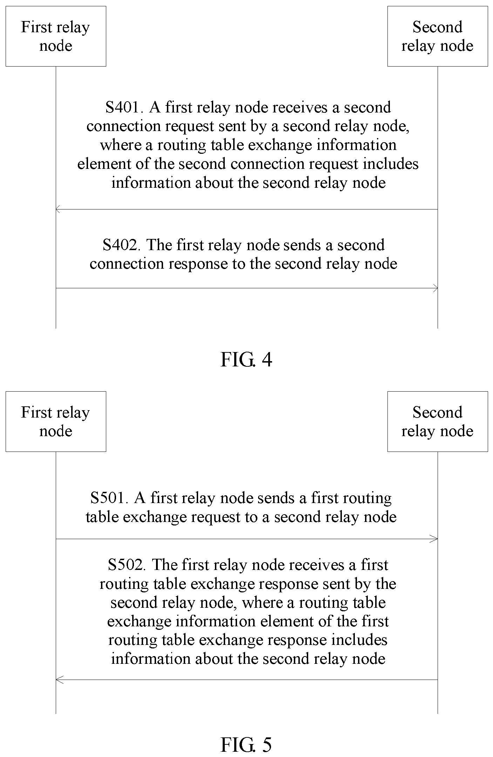

Alternatively, Embodiment 2 of this application may further provide a data transmission method. FIG. 4 is a flowchart of another data transmission method according to Embodiment 2 of this application. As shown in FIG. 4, before the first relay node determines the target station of the data based on the information about the neighboring node of the first relay node in S202, the method may further include:

S401. The first relay node receives a second connection request sent by a second relay node, where a routing table exchange information element of the second connection request includes information about the second relay node.

S402. The first relay node sends a second connection response to the second relay node.

Specifically, the second connection request may be a D2D direct connection request, and the second connection response is a response corresponding to the D2D direct connection request. The second relay node may send the second connection request to the first relay node when the second relay node is associated with a new station, a station that has been associated with the second relay node is dissociated, the second relay node needs to establish a D2D direct connection to the first relay node, or the second relay node loses a direct connection to the first relay node.

It should be noted that, to ensure that the second relay node can obtain information about the first relay node, a routing table exchange information element of the second connection response may include the information about the first relay node, so that the second relay node performs data transmission based on the information about the first relay node.

In other words, the first relay node may receive, in a process of establishing a direct connection to the second relay node, the connection request initiated by the second relay node, to exchange information with the second relay node, so that the first relay node can obtain the information about the second relay node, and the second relay node can also obtain the information about the first relay node.

Alternatively, Embodiment 2 of this application may further provide a data transmission method. FIG. 5 is a flowchart of still another data transmission method according to Embodiment 2 of this application. As shown in FIG. 5, before the first relay node determines the target station of the data based on the information about the neighboring node of the first relay node in S202, the method may further include:

S501. The first relay node sends a first routing table exchange request (Routing Table Exchange Request) to a second relay node.

S502. The first relay node receives a first routing table exchange response (Routing Table Exchange Response) sent by the second relay node, where a routing table exchange information element of the first routing table exchange response includes information about the second relay node.

Specifically, the first relay node may send the first routing table exchange request to the second relay node when the first relay node is associated with a new station, a station that has been associated with the first relay node is dissociated, the first relay node needs to establish a D2D direct connection to the second relay node, or the first relay node loses a direct connection to the second relay node.

The first relay node may send the first routing table exchange request to the second relay node in a unicast, multicast, or broadcast manner, and the first relay node may receive the first routing table exchange response sent by the second relay node in a unicast, multicast, or broadcast manner. To ensure that the second relay node can obtain information about the first relay node, a routing table exchange information element of the first routing table exchange request may include the information about the first relay node, so that the second relay node performs data transmission based on the information about the first relay node.

In other words, the first relay node may actively initiate the routing table exchange request to the second relay node, to exchange information with the second relay node, so that the first relay node can obtain the information about the second relay node, and the second relay node can also obtain the information about the first relay node.

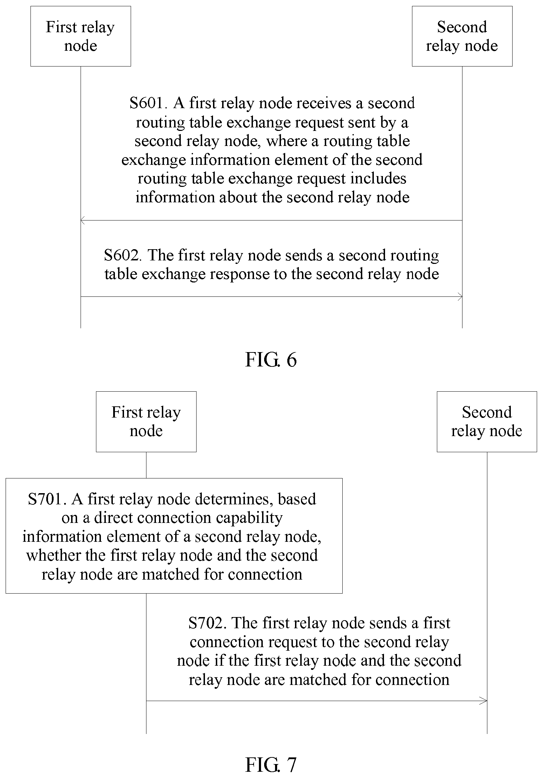

Alternatively, Embodiment 2 of this application may further provide a data transmission method. FIG. 6 is a flowchart of yet another data transmission method according to Embodiment 2 of this application. As shown in FIG. 6, before the first relay node determines the target station of the data based on the information about the neighboring node of the first relay node in S202, the method may further include:

S601. The first relay node receives a second routing table exchange request sent by a second relay node, where a routing table exchange information element of the second routing table exchange request includes information about the second relay node.

S602. The first relay node sends a second routing table exchange response to the second relay node.

Specifically, the second relay node may send the second routing table exchange request to the first relay node when the second relay node is associated with a new station, a station that has been associated with the second relay node is dissociated, the second relay node needs to establish a D2D direct connection to the first relay node, or the second relay node loses a direct connection to the first relay node.

The first relay node may receive the second routing table exchange request sent by the second relay node in a unicast, multicast, or broadcast manner, and the first relay node may send the second routing table exchange response to the second relay node in a unicast, multicast, or broadcast manner. To ensure that the second relay node can obtain information about the first relay node, a routing table exchange information element of the second routing table exchange response may include the information about the first relay node, so that the second relay node performs data transmission based on the information about the first relay node.

In other words, the first relay node may passively receive the routing table exchange request actively initiated by the second relay node, to exchange information with the second relay node, so that the first relay node can obtain the information about the second relay node, and the second relay node can also obtain the information about the first relay node.

Alternatively, before the first relay node determines the target station of the data based on the information about the neighboring node of the first relay node in S202, the method may further include:
the first relay node monitors a routing table exchange notification sent by the second relay node, where a routing table exchange information element of the routing table exchange notification may include information about the second relay node.

In other words, the first relay node may passively monitor the routing table exchange notification sent by the second relay node, to obtain the information about the second relay node.

It should be noted that the first relay node may obtain, in another procedure, the information about the second relay node based on another type of message sent by the second relay node. The foregoing embodiments are merely examples for description, and this application is not limited thereto.

In the data transmission methods provided in Embodiment 2 of this application, a plurality of implementations in which the first relay node obtains the information about the second relay node are provided, so that the first relay node can determine the target station based on the information about the neighboring node of the first relay node, namely, the information about the second relay node, to perform data transmission and implement effective data transmission between stations. In this way, a data transmission path between stations is effectively shortened, and network overheads in a data transmission process are reduced.

Optionally, based on the data transmission method in the foregoing embodiments, Embodiment 3 of this application further provides a data transmission method. FIG. 7 is a flowchart of a data transmission method according to Embodiment 3 of this application. That the first relay node sends a first connection request to the second relay node in S301 may include the following steps.

S701. The first relay node determines, based on a direct connection capability information element of the second relay node, whether the first relay node and the second relay node are matched for connection.

Specifically, the direct connection capability information element may be a D2D direct connection capability information element (Capability Information Element).

S702. The first relay node sends the first connection request to the second relay node if the first relay node and the second relay node are matched for connection.

The first relay node may send the first connection request to the second relay node when determining that the first relay node and the second relay node are matched for connection. In this way, a success rate of a direct connection between the first relay node and the second relay node can be improved, and power consumption of a relay node in a direct connection process can be reduced.

It should be noted that the second relay node may send a connection request to the first relay node in a manner similar to that in FIG. 7. FIG. 7 is merely an example for description in which the first relay node sends a connection request, and this application is not limited thereto.

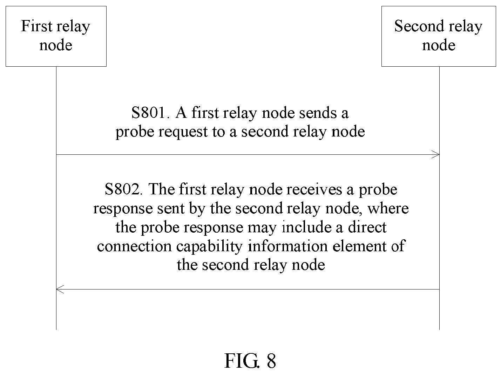

Optionally, Embodiment 3 of this application further provides a data transmission method. FIG. 8 is a flowchart of another data transmission method according to Embodiment 3 of this application. Before the first relay node determines, based on the direct connection capability information element of the second relay node, whether the first relay node and the second relay node are matched for connection in S701 in the foregoing method, the method may further include:

S801. The first relay node sends a probe request (Probe Request) to the second relay node.

S802. The first relay node receives a probe response sent by the second relay node, where the probe response may include the direct connection capability information element of the second relay node.

Specifically, the probe request may be a D2D probe request, and the probe response may be a D2D probe response. The first relay node may actively send the probe request to neighboring relay nodes of the first relay node in a multicast or broadcast manner, and monitor the probe response returned by the second relay node in the neighboring relay nodes of the first relay node, to complete a neighboring relay node probe process.

Alternatively, before the first relay node determines, based on the direct connection capability information element of the second relay node, whether the first relay node and the second relay node are matched for connection in S701 in the foregoing method, the method may further include:
the first relay node monitors a D2D beacon (Beacon) frame sent by the second relay node, where the D2D beacon frame may include the direct connection capability information element of the second relay node.

Specifically, the D2D beacon frame is different from a beacon frame in the standard 802.11, and the D2D beacon frame may be separately sent. In other words, the first relay node may passively monitor the D2D beacon frame sent by the second relay node, to complete a neighboring relay node probe process.

In the data transmission method, a plurality of implementations in which the first relay node obtains the direct connection capability information element of the second relay node are provided, so that the first relay node can send the first connection request to the second relay node when determining, based on the direct connection capability information element of the second relay node, that the first relay node and the second relay node are matched for connection. In this way, a success rate of a direct connection between the first relay node and the second relay node can be improved, and power consumption of a relay node in a direct connection process can be reduced.

Optionally, the direct connection capability information element includes a direct connection permit identifier of the second relay node, a quantity of relay nodes that are permitted to be directly connected to the second relay node, and a quantity of relay nodes that have been directly connected to the second relay node. Before the first relay node sends the first connection request to the second relay node if the first relay node and the second relay node are matched for connection in S702, the method may further include:
the first relay node determines, if the first relay node determines, based on the direct connection permit identifier of the second relay node, that the second relay node is permitted to be directly connected, and the quantity of relay nodes that are permitted to be directly connected is greater than the quantity of relay nodes that have been directly connected, that the first relay node and the second relay node are matched for connection.

Specifically, in the direct connection capability information element, different attribute fields (Attribute Field) may carry different information. In other words, the direct connection permit identifier of the second relay node, the quantity of relay nodes that are permitted to be directly connected to the second relay node, and the quantity of relay nodes that have been directly connected to the second relay node are separately carried in different attribute fields in the direct connection capability information element. In the direct connection capability information element, for example, a correspondence between each attribute field and information may be shown in Table 1.

**Table 1**

| Attribute field | Information |
|---|---|
| D2D connection permit | Direct connection permit identifier |
| D2D connection capability | Quantity of relay nodes that are permitted to be directly connected |
| Quantity of connected D2D devices | Quantity of directly connected relay nodes |

The D2D connection permit (D2D connection Permit) in the direct connection capability information element shown in Table 1 may be used to carry the direct connection permit identifier of the second relay node. The direct connection permit identifier is used to indicate whether the second relay node is permitted to be directly connected. For example, if the direct connection permit identifier is 0, the first relay node may determine that the second relay node is not permitted to be directly connected; or if the direct connection permit identifier is 1, the first relay node may determine that the second relay node is permitted to be directly connected. Certainly, the direct connection permit identifier is merely an example for description. The direct connection permit identifier may indicate, in another manner, whether the second relay node is permitted to be directly connected, and this application is not limited thereto.

The D2D connection capability (D2D connection Capability) in the direct connection capability information element shown in Table 1 may be used to carry the quantity of relay nodes that are permitted to be directly connected to the second relay node. The quantity of connected D2D devices (quantity of D2D Linked Device) in the direct connection capability information element shown in Table 1 may be used to carry the quantity of relay nodes that have been directly connected to the second relay node. For example, if the D2D connection capability is 5, and the quantity of connected D2D devices is 4, the first relay node may determine that the quantity of relay nodes that are permitted to be directly connected is greater than the quantity of relay nodes that have been directly connected; or if the D2D connection capability is 5, and the quantity of connected D2D devices is 5, the first relay node may determine that the quantity of relay nodes that are permitted to be directly connected is equal to the quantity of relay nodes that have been directly connected.

In the method, when determining that the second relay node is permitted to be directly connected, and the quantity of relay nodes that are permitted to be directly connected is greater than the quantity of relay nodes that have been directly connected, the first relay node may determine that the first relay node and the second relay node are matched for connection.

Optionally, the direct connection capability information element includes a transmission rate of the second relay node. That the first relay node determines, if the first relay node determines, based on the direct connection permit identifier of the second relay node, that the second relay node is permitted to be directly connected, and the quantity of relay nodes that are permitted to be directly connected is greater than the quantity of relay nodes that have been directly connected, that the first relay node and the second relay node are matched for connection may include:
if the first relay node determines, based on the direct connection permit identifier of the second relay node, that the second relay node is permitted to be directly connected, the quantity of relay nodes that are permitted to be directly connected is greater than the quantity of relay nodes that have been directly connected, and a transmission rate difference is within a preset range, the first relay node determines that the first relay node and the second relay node are matched for connection, where the transmission rate difference is a difference between a transmission rate of the first relay node and the transmission rate of the second relay node.

Specifically, in the direct connection capability information element, for example, a correspondence between each attribute field and information may also be shown in Table 2.

**Table 2**

| Attribute field | Information |
|---|---|
| D2D connection permit | Direct connection permit identifier |
| D2D connection capability | Quantity of relay nodes that are permitted to be directly connected |
| Quantity of connected D2D devices | Quantity of directly connected relay nodes |
| Transmission rate | Current transmission rate |

Based on the direct connection capability information element described above, the direct connection capability information element may further include the transmission rate of the second relay node. As shown in Table 2, the transmission rate (Transmission Rate) field in the direct connection capability information element may be used to carry a current transmission rate of the second relay node. For example, if the current transmission rate of the second relay node is 80 Mbps, and a current transmission rate of the first relay node is 100 Mbps, the transmission rate difference 20 Mbps is within the preset range, for example, 0-25 Mbps. In this case, if the second relay node is permitted to be directly connected, and the quantity of relay nodes that are permitted to be directly connected is greater than the quantity of relay nodes that have been directly connected, the first relay node may determine that the first relay node and the second relay node are matched for connection.

Optionally, the information about the second relay node may further include attribute information of the second relay node and attribute information of a relay group to which the second relay node belongs.

Specifically, the second relay node is a relay node directly connected to the first relay node, and therefore the second relay node is a neighboring relay node of the first relay node. A depth from the second relay node to the first relay node is equal to a hop count between the second relay node and the first relay node plus 1. The hop count between the second relay node and the first relay node is equal to a quantity of nodes between the second relay node and the first relay node. The second relay node is a neighboring relay node of the first relay node, that is, the hop count is 0, and therefore the depth from the second relay node to the first relay node is 1. The attribute information of the second relay node may also be referred to as depth 1 neighboring node attribute information (Depth 1 Neighbor Info Attribute).

A connection between the second relay node and the first relay node is a D2D direct connection, and therefore the attribute information of the relay group to which the second relay node belongs may be D2D relay group attribute information (D2D Relay Group Info Attribute).

Optionally, the attribute information of the second relay node includes an identifier of a first attribute type and information about a device connected to the second relay node, and the device connected to the second relay node includes a station associated with the second relay node and/or a relay node directly connected to the second relay node.

Optionally, the information about the device connected to the second relay node includes a Medium Access Control (Medium Access Control, MAC) address of the device connected to the second relay node, a depth of the device connected to the second relay node, and a type of the device connected to the second relay node.

The type of the device connected to the second relay node is used to indicate that the device connected to the second relay node is the station associated with the second relay node or the relay node directly connected to the second relay node.

If the type of the device connected to the second relay node is used to indicate that the device connected to the second relay node is a relay node directly connected to the second relay node, the information about the device connected to the second relay node further includes link quality indicator (Link Quality Indicator, LQI) of the second relay node.

Specifically, a routing table exchange information element of any message such as the first routing table exchange response, the second routing table exchange request, or the detected routing table exchange notification described above may include the information about the second relay node. In the routing table exchange information element, different attribute fields may carry different information. In other words, the identifier of the first attribute type and the information about the device connected to the second relay node that are in the attribute information of the second relay node may be separately carried in different attribute fields in the routing table exchange information element. In the routing table exchange information element, for example, a correspondence between each attribute field and information may be shown in Table 3.

**Table 3**

| Field name | Size (byte) | Description |
|---|---|---|
| Attribute identifier | 1 | First attribute type |
| Length | Variable | Remaining length after the length field |
| Connected device information description | | Information about the device connected to the second relay node |

As shown in Table 3, in the routing table exchange information element, the attribute identifier (Attribute Identifier) field is 1 byte, and may carry the first attribute type, to indicate the attribute information that is of the second relay node and that is corresponding to the first attribute type; in the routing table exchange information element, a size of the length (length) field is a variable instead of a fixed byte count, and is used to carry the remaining length after the length field; and in the routing table exchange information element, the connected device information description (Connected Device Info Description) field may carry the information about the device connected to the second relay node, and the device connected to the second relay node includes the station associated with the second relay node and/or the relay node directly connected to the second relay node.

In the routing table exchange information element, different parts of the connected device information description field may carry different information. In other words, the MAC address of the device connected to the second relay node, the depth of the device connected to the second relay node, and the type of the device connected to the second relay node that are in the information about the device connected to the second relay node may be separately carried in the different parts of the connected device information description field in the routing table exchange information element. In the routing table exchange information element, for example, a correspondence between each part of the connected device information description field and information may be shown in Table 4.

**Table 4**

| Field name | Size (byte) | Description |
|---|---|---|
| Length | 1 | Remaining length after the length field |
| Connected device address | 6 | MAC address of the device connected to the second relay node |
| Depth | 1 | Depth of the device connected to the second relay node |
| Device type | 1 | Type of the device connected to the second relay node |

As shown in Table 4, in the routing table exchange information element, the length field in the connected device information description field is 1 byte, and is used to indicate the remaining length after the length field; in the routing table exchange information element, the connected device address (Connected Device Address) in the connected device information description field is 6 bytes, and is used to carry the MAC address of the device connected to the second relay node; in the routing table exchange information element, the depth (Depth) in the connected device information description field is 1 byte, and is used to carry the depth of the device connected to the second relay node, and the depth may be 1 for a neighboring device; and in the routing table exchange information element, the device type (Device Type) in the connected device information description field is 1 byte, and is used to carry the type of the device connected to the second relay node, to indicate whether the device connected to the second relay node is an associated station or a directly connected relay node.

If the type of the device connected to the second relay node indicates that the device connected to the second relay node is a directly connected relay node, the information about the device connected to the second relay node further includes an LQI of the second relay node. When the LQI is included, in the routing table exchange information element, for example, the correspondence between each part of the connected device information description field and information may also be shown in Table 5.

**Table 5**

| Field name | Size (byte) | Description |
|---|---|---|
| Length | 1 | Remaining length after the length field |
| Connected device address | 6 | MAC address of the device connected to the second relay node |
| Depth | 1 | Depth of the device connected to the second relay node |
| Device type | 1 | Type of the device connected to the second relay node |
| LQI | 1 | Link quality indicator of the second relay node |

As shown in Table 5, in the routing table exchange information element, the LQI field in the connected device information description field may be 1 byte, and the LQI field may carry the LQI of the second relay node when the device type field indicates that the device connected to the second relay node is an associated relay node, to determine an optimum data transmission path.

Optionally, the attribute information of the relay group to which the second relay node belongs includes an identifier of a second attribute type, a MAC address of a third relay node directly connected to the second relay node, and information about a device connected to the third relay node, and the device connected to the third relay node includes a station associated with the third relay node and/or a relay node directly connected to the third relay node.

Optionally, the information about the device connected to the third relay node includes a MAC address of the device connected to the third relay node, a depth of the device connected to the third relay node, and a type of the device connected to the third relay node;
the type of the device connected to the third relay node is used to indicate that the device connected to the third relay node is the station associated with the third relay node or the relay node directly connected to the third relay node; and
if the type of the device connected to the third relay node is used to indicate that the device connected to the third relay node is the relay node directly connected to the third relay node, and the relay node directly connected to the third relay node has no associated station, the information about the device connected to the third relay node further includes an LQI of the third relay node.

Specifically, the identifier of the second attribute type, the MAC address of the third relay node, and the information about the device connected to the third relay node that are in the attribute information of the relay group to which the second relay node belongs may be separately carried in different attribute fields in the routing table exchange information element. In the routing table exchange information element, for example, a correspondence between each attribute field and information may also be shown in Table 6.

**Table 6**

| Field name | Size (byte) | Description |
|---|---|---|
| Attribute identifier | 1 | Second attribute type |
| Length | Variable | Remaining length after the length field |
| Relay node address | 6 | MAC address of the third relay node |
| Relay group information description | | Information about the device connected to the third relay node |

As shown in Table 6, in the routing table exchange information element, the attribute identifier field is 1 byte, and may carry the second attribute type, to indicate the attribute information that is of the relay group to which the second relay node belongs and that is corresponding to the second attribute type; in the routing table exchange information element, a size of the length field is a variable instead of a fixed byte count, and is used to carry the remaining length after the length field; in the routing table exchange information element, a directly connected relay node address (Relay Address) is 6 bytes, and is used to carry the MAC address of the third relay node directly connected to the second relay node; in the routing table exchange information element, the relay group information description (Relay Group Info Description) field may carry the information about the device connected to the third relay node, and the device connected to the third relay node includes the station associated with the third relay node and/or the relay node directly connected to the third relay node.

In the routing table exchange information element, different parts of the relay group information description field may carry different information. In other words, the MAC address of the device connected to the third relay node, the depth of the device connected to the third relay node, and the type of the device connected to the third relay node that are in the information about the device connected to the third relay node may be separately carried in the different parts of the relay group information description field in the routing table exchange information element. In the routing table exchange information element, for example, a correspondence between each part of the relay group information description field and information may be shown in Table 7.

**Table 7**

| Field name | Size (byte) | Description |
|---|---|---|
| Length | 1 | Remaining length after the length field |
| Connected device address | 6 | MAC address of the device connected to the third relay node |
| Depth | 1 | Depth of the device connected to the third relay node |
| Device type | 1 | Type of the device connected to the third relay node |

As shown in Table 7, in the routing table exchange information element, the length field in the relay group information description field is 1 byte, and is used to indicate the remaining length after the length field; in the routing table exchange information element, the connected device address in the relay group information description field is 6 bytes, and is used to carry the MAC address of the device connected to the third relay node; in the routing table exchange information element, the depth in the relay group information description field is 1 byte, and is used to carry the depth of the device connected to the third relay node, and the device depth may be 2 for the third relay node and the first relay node; and in the routing table exchange information element, the device type in the relay group information description field is 1 byte, and is used to carry the type of the device connected to the third relay node, to indicate whether the device connected to the third relay node is an associated station or a directly connected relay node.

If the type of the device connected to the third relay node indicates that the device connected to the third relay node is a directly connected relay node, and the relay node directly connected to the third relay node has no associated station, the information about the device connected to the third relay node further includes an LQI of the third relay node. When the LQI is included, in the routing table exchange information element, for example, the correspondence between each part of the relay group information description field and information may also be shown in Table 8.

**Table 8**

| Field name | Size (byte) | Description |
|---|---|---|
| Length | 1 | Remaining length after the length field |
| Connected device address | 6 | MAC address of the device connected to the third relay node |
| Depth | 1 | Depth of the device connected to the third relay node |
| Device type | 1 | Type of the device connected to the third relay node |
| LQI | 1 | Link quality indicator of the third relay node |

As shown in Table 8, in the routing table exchange information element, the LQI field in the relay group information description field may be 1 byte, and when the device type field indicates that the device connected to the third relay node is an associated relay node, and the relay node directly connected to the third relay node has no associated station, the LQI field may carry the LQI of the third relay node, to determine an optimum data transmission path.

It should be noted that if a current wireless network system is a network system including k levels of relay nodes, where k is greater than or equal to 2, and a specific value of k may be determined by an access point. In the network system, if a conventional tree network system is used from a station A that is associated with a level-k relay node A to a station B that is associated with a level-k relay node B, a total hop count of a data transmission path is 2k+1. The hop count of the data transmission path may be a quantity of devices that the data passes through in transmission.

To shorten the data transmission path, neighboring node information exchanged between adjacent relay nodes needs to include depth d relay group information, where d includes at least one integer less than 2k, so that the relay node A finds the station B. Therefore, in this application, before exchanging the neighboring node information, the adjacent relay nodes need to first establish, based on a tree structure, a network in which only a parent-child association relationship exists. After determining a maximum level k of the relay node in the network system, the access point may deliver the value of k to all relay nodes, so that the relay node can exchange a corresponding routing table exchange information element when establishing a direct connection to a neighboring relay node. However, with an increase in d, the corresponding routing table exchange information element may be larger, and a management frame corresponding to the routing table exchange information element may be longer. In this case, the access point may determine an actual value of d (it still should be ensured that d<2k), to effectively control, on the basis of shortening the data transmission path, a size of a local routing table stored in each relay node and a length of a routing information exchange frame.

In the data transmission method provided in Embodiment 3 of this application, a plurality of implementations of the information about the neighboring node of the first relay node, namely, the information about the second relay node directly connected to the first relay node, are further provided, so that the first relay node can obtain more complete and accurate information about the second relay node, and the first relay node can determine an optimum data transmission path based on the information about the neighboring node of the first relay node. In this way, efficiency of data transmission between stations is improved, and network overheads in a data transmission process are effectively reduced.

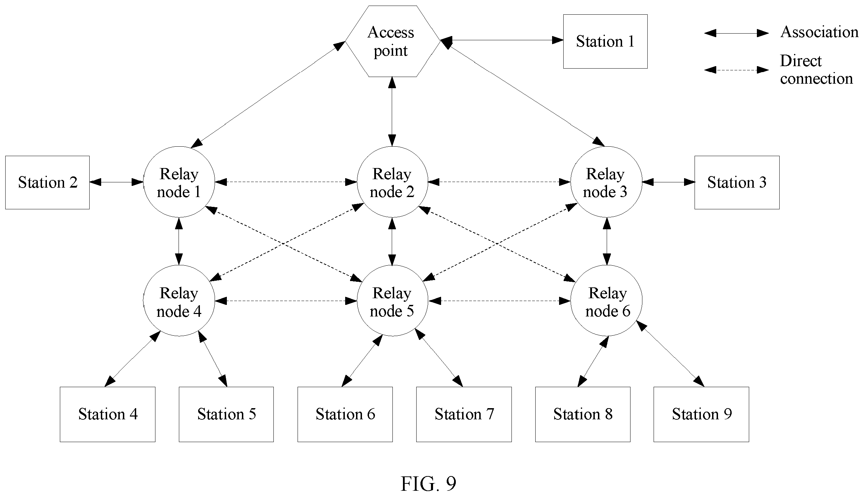

The following embodiment of this application is described by using a specific example. FIG. 9 is an architectural diagram of a wireless network system according to Embodiment 4 of this application. As shown in FIG. 9, the wireless network system may include an access point, relay nodes 1 to 6, and stations 1 to 9. The access point is a parent node of relay nodes 1 to 3. A relay node 1 is a parent node of a relay node 4, a relay node 2 is a parent node of a relay node 5, and a relay node 3 is a parent node of a relay node 6. The wireless network system shown in FIG. 8 may be a network system including two levels of relay nodes.

The access point is associated with a station 1, the relay node 1 is associated with a station 2, the relay node 3 is associated with a station 3, the relay node 4 is associated with a station 4 and a station 5, the relay node 5 is associated with a station 6 and a station 7, and the relay node 6 is associated with a station 8 and a station 9.

The relay node 1 is further separately directly connected to the relay node 2 and the relay node 5, and the relay node 4 is further separately directly connected to the relay node 2 and the relay node 5. The relay node 2 is further separately directly connected to the relay node 3 and the relay node 6, and the relay node 5 is further separately directly connected to the relay node 3 and the relay node 6. The relay node 2 is further separately directly connected to the relay node 3 and the relay node 6, and the relay node 5 is further separately directly connected to the relay node 3 and the relay node 6.

Each relay node in the relay nodes 1 to 6 may send information about a neighboring node of each relay node by using a relay node directly connected to each relay node, to update local routing table information of each relay node. The information about the neighboring node of each relay node may include information about all stations associated with each relay node, information about all relay nodes directly connected to each relay node, and information about all stations associated with the relay node directly connected to each relay node.

For example, if the relay node 4 receives data sent by the station 4 and the data transmission method in this application is not used, the relay node 4 needs to transmit the data to the relay node 1, the relay node 1 transmits the data to the access point, the access point transmits the data to the relay node 3, the relay node 3 transmits the data to the relay node 6, and finally, the relay node 6 transmits the data to the station 8. Therefore, if the data transmission method in this application is not used, for example, a transmission path of the data may be: the station 4 -> the relay node 4 -> the relay node 1 -> the access point -> the relay node 3 -> the relay node 6 -> the station 8. In other words, if the data transmission method in this application is not used, the data transmission path has five hops when the station 4 sends the data to the station 8.

If the data transmission method in this application is used, the relay node 4 may have information about the relay node 2 and information about all stations associated with the relay node 3 and the relay node 6, and the relay node 4 may have information about the relay node 5 and the information about all the stations associated with the relay node 3 and the relay node 6. If the data transmission method in this application is used, when the relay node 4 receives data sent by the station 4, a target station of the data may be determined. In other words, the station 8 is a station associated with the relay node 6, and the relay node 6 is directly connected to the relay node 2 and the relay node 5, and therefore the relay node 4 may transmit the data to the station 8 by using any of the following paths: the relay node 4 -> the relay node 2 -> the relay node 6 -> the station 8 or the relay node 4 -> the relay node 5 -> the relay node 6 -> the station 8. The relay node 4 may select, by comparing an LQI of the relay node 2 with an LQI of the relay node 5, a transmission path corresponding to either the relay node 2 or the relay node 5 as an optimum transmission path of the data, and transmit the data to the station 8 by using the optimum transmission path of the data. In other words, if the data transmission method in this application is used, the data transmission path has only three hops when the station 4 sends the data to the station 8.

It should be noted that when the station 4 expects to send data to the station 1, if a parent node of the station 4, namely, the relay node 4, cannot find the station 1 in a local routing table, the relay node 4 directly reports the data to the relay node 1, and the relay node 1 reports the data to the access point. In other words, when any level of relay node cannot find a destination address in a local routing table of the relay node, the relay node directly reports data to a parent node of the relay node. If the parent node of the relay node can find the destination address in a local routing table of the parent node of the relay node, relay is performed based on the locally stored routing table, or if the parent node of the relay node cannot find the destination address in the local routing table of the parent node of the relay node, the data is further reported to a parent node of a higher level, and so on.

If each level of parent node cannot find a path of a destination address of transmitted data, the data is reported level by level to the access point. The access point can find the path of the destination address of the data based on a network structure, to ensure that there is at least one path from a source address to any destination address in the network.

Two levels of relay nodes are merely used as an example for description in Embodiment 4, and inter-station data transmission in a network system including three levels of relay nodes is similar to that in the foregoing embodiment. Details are not described herein again.

Therefore, this application can effectively shorten a data transmission path between stations and reduce network overheads in a data transmission process.

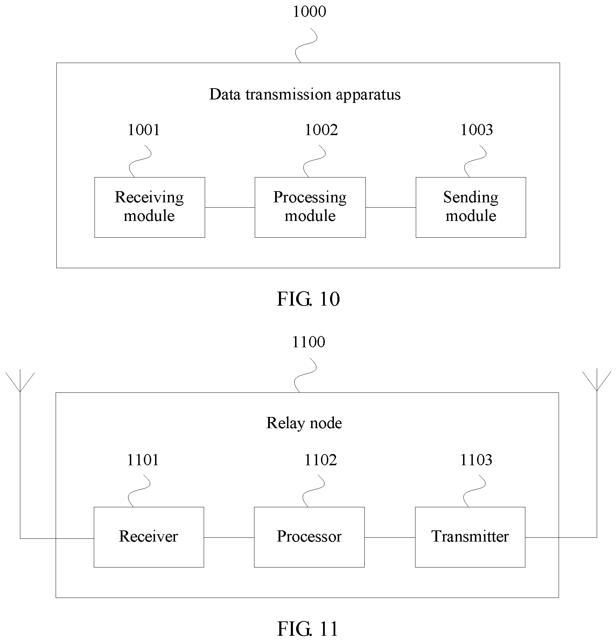

Embodiment 5 of this application further provides a data transmission apparatus. FIG. 10 is a schematic structural diagram of a data transmission apparatus according to Embodiment 5 of this application. The data transmission apparatus may be integrated into a relay node through software and/or hardware. As shown in FIG. 10, a data transmission apparatus 1000 may include a receiving module 1001, a processing module 1002, and a sending module 1003.

The receiving module 1001 may be implemented by a receiver of the relay node through software and/or hardware, the processing module 1002 may be implemented by a processor of the relay node through software and/or hardware, and the sending module 1003 may be implemented by a transmitter of the relay node through software and/or hardware.

For example, the receiver may include a radio frequency receiver, a receive antenna, or a device receive interface. For example, the processor may include any one of one or more application-specific integrated circuits (Application-Specific Integrated Circuit, ASIC), a digital signal processor (Digital Signal Processor, DSP), a digital signal processing device (Digital Signal Processing Device, DSPD), a programmable logic device (Programmable Logic Device, PLD), a field-programmable gate array (Field-Programmable Gate Array, FPGA), a controller, a microcontroller, and a microprocessor. For example, the transmitter may include a radio frequency transmitter, a transmit antenna, or a device transmit interface.

The receiving module 1001 is configured to receive data.

The processing module 1002 is configured to determine a target station of the data based on information about a neighboring node of a first relay node.

The sending module 1003 is configured to send the data to the target station.

Optionally, the information about the neighboring node of the first relay node includes information about all stations associated with the first relay node.

The sending module 1003 is specifically configured to directly send the data to the target station if the target station is a station associated with the first relay node.

Optionally, the information about the neighboring node of the first relay node further includes information about a second relay node directly connected to the first relay node, and the information about the second relay node includes information about all stations associated with the second relay node.

The sending module 1003 is specifically configured to send the data to the second relay node if the target station is a station associated with the second relay node, so that the second relay node sends the data to the target station.

Optionally, the sending module 1003 is further configured to send a connection request to the second relay node.

The receiving module 1001 is further configured to receive a connection response sent by the second relay node, where a routing table exchange information element of the connection response includes the information about the second relay node.

Optionally, the processing module 1002 is further configured to determine, based on a direct connection capability information element of the second relay node, whether the first relay node and the second relay node are matched for connection.

The sending module 1003 is further configured to send the connection request to the second relay node if the first relay node and the second relay node are matched for connection.

Optionally, the direct connection capability information element includes a direct connection permit identifier of the second relay node, a quantity of relay nodes that are permitted to be directly connected to the second relay node, and a quantity of relay nodes that have been directly connected to the second relay node.

The processing module 1002 is specifically configured to: if determining, based on the direct connection permit identifier of the second relay node, that the second relay node is permitted to be directly connected, and the quantity of relay nodes that are permitted to be directly connected is greater than the quantity of relay nodes that have been directly connected, determine that the first relay node and the second relay node are matched for connection.

Optionally, the direct connection capability information element includes a transmission rate of the second relay node.

The processing module 1002 is specifically configured to: if determining, based on the direct connection permit identifier of the second relay node, that the second relay node is permitted to be directly connected, the quantity of relay nodes that are permitted to be directly connected is greater than the quantity of relay nodes that have been directly connected, and a transmission rate difference is within a preset range, determine that the first relay node and the second relay node are matched for connection, where the transmission rate difference is a difference between a transmission rate of the first relay node and the transmission rate of the second relay node.

Optionally, the information about the second relay node further includes attribute information of the second relay node and attribute information of a relay group to which the second relay node belongs.

Optionally, the attribute information of the second relay node includes an identifier of a first attribute type and information about a device connected to the second relay node, and the device connected to the second relay node includes a station associated with the second relay node and/or a relay node directly connected to the second relay node.

Optionally, the information about the device connected to the second relay node includes a MAC address of the device connected to the second relay node, a depth of the device connected to the second relay node, and a type of the device connected to the second relay node.

The type of the device connected to the second relay node is used to indicate that the device connected to the second relay node is the station associated with the second relay node or the relay node directly connected to the second relay node.

If the type of the device connected to the second relay node is used to indicate that the device connected to the second relay node is a relay node directly connected to the second relay node, the information about the device connected to the second relay node further includes an LQI of the second relay node.

Optionally, the attribute information of the relay group to which the second relay node belongs includes an identifier of a second attribute type, a MAC address of a third relay node directly connected to the second relay node, and information about a device connected to the third relay node, and the device connected to the third relay node includes a station associated with the third relay node and/or a relay node directly connected to the third relay node.

Optionally, the information about the device connected to the third relay node includes a MAC address of the device connected to the third relay node, a depth of the device connected to the third relay node, and a type of the device connected to the third relay node.

The type of the device connected to the third relay node is used to indicate that the device connected to the third relay node is the station associated with the third relay node or the relay node directly connected to the third relay node.

If the type of the device connected to the third relay node is used to indicate that the device connected to the third relay node is the relay node directly connected to the third relay node, and the relay node directly connected to the third relay node has no associated station, the information about the device connected to the third relay node further includes an LQI of the third relay node.

The data transmission apparatus provided in Embodiment 5 of this application may perform any data transmission method in FIG. 2 to FIG. 8. For a specific implementation process and beneficial effects, refer to the foregoing descriptions. Details are not described herein again.

Embodiment 6 of this application further provides a relay node. FIG. 11 is a schematic structural diagram of a relay node according to Embodiment 6 of this application. As shown in FIG. 11, a relay node 1100 may include a receiver 1101, a processor 1102, and a transmitter 1103. The receiver 1101 is connected to the processor 1102, and the processor 1102 is further connected to the transmitter 1103.

The receiver 1101 is configured to receive data.

The processor 1102 is configured to determine a target station of the data based on information about a neighboring node of a first relay node.

The transmitter 1103 is configured to send the data to the target station.

Optionally, the information about the neighboring node of the first relay node includes information about all stations associated with the first relay node.

The transmitter 1103 is specifically configured to directly send the data to the target station if the target station is a station associated with the first relay node.

Optionally, the information about the neighboring node of the first relay node further includes information about a second relay node directly connected to the first relay node, and the information about the second relay node includes information about all stations associated with the second relay node.

The transmitter 1103 is specifically configured to send the data to the second relay node if the target station is a station associated with the second relay node, so that the second relay node sends the data to the target station.

Optionally, the transmitter 1103 is further configured to send a connection request to the second relay node before the processor 1102 determines the target station of the data based on the information about the neighboring node of the first relay node.

The receiver 1101 is further configured to receive a connection response sent by the second relay node, where a routing table exchange information element of the connection response includes the information about the second relay node.

Optionally, the processor 1102 is further configured to determine, based on a direct connection capability information element of the second relay node, whether the first relay node and the second relay node are matched for connection.

The transmitter 1103 is further configured to send the connection request to the second relay node if the first relay node and the second relay node are matched for connection.

Optionally, the direct connection capability information element includes a direct connection permit identifier of the second relay node, a quantity of relay nodes that are permitted to be directly connected to the second relay node, and a quantity of relay nodes that have been directly connected to the second relay node.

The processor 1102 is specifically configured to: if determining, based on the direct connection permit identifier of the second relay node, that the second relay node is permitted to be directly connected, and the quantity of relay nodes that are permitted to be directly connected is greater than the quantity of relay nodes that have been directly connected, determine that the first relay node and the second relay node are matched for connection.

Optionally, the direct connection capability information element further includes a transmission rate of the second relay node.

The processor 1102 is specifically configured to: if determining, based on the direct connection permit identifier of the second relay node, that the second relay node is permitted to be directly connected, the quantity of relay nodes that are permitted to be directly connected is greater than the quantity of relay nodes that have been directly connected, and a transmission rate difference is within a preset range, determine that the first relay node and the second relay node are matched for connection, where the transmission rate difference is a difference between a transmission rate of the first relay node and the transmission rate of the second relay node.

Optionally, the information about the second relay node further includes attribute information of the second relay node and attribute information of a relay group to which the second relay node belongs.

Optionally, the attribute information of the second relay node includes an identifier of a first attribute type and information about a device connected to the second relay node, and the device connected to the second relay node includes a station associated with the second relay node and/or a relay node directly connected to the second relay node.

Optionally, the information about the device connected to the second relay node includes a MAC address of the device connected to the second relay node, a depth of the device connected to the second relay node, and a type of the device connected to the second relay node.

The type of the device connected to the second relay node is used to indicate that the device connected to the second relay node is the station associated with the second relay node or the relay node directly connected to the second relay node.

If the type of the device connected to the second relay node is used to indicate that the device connected to the second relay node is a relay node directly connected to the second relay node, the information about the device connected to the second relay node further includes an LQI of the second relay node.

Optionally, the attribute information of the relay group to which the second relay node belongs includes an identifier of a second attribute type, a MAC address of a third relay node directly connected to the second relay node, and information about a device connected to the third relay node, and the device connected to the third relay node includes a station associated with the third relay node and/or a relay node directly connected to the third relay node.

Optionally, the information about the device connected to the third relay node includes a MAC address of the device connected to the third relay node, a depth of the device connected to the third relay node, and a type of the device connected to the third relay node.

The type of the device connected to the third relay node is used to indicate that the device connected to the third relay node is the station associated with the third relay node or the relay node directly connected to the third relay node.

If the type of the device connected to the third relay node is used to indicate that the device connected to the third relay node is the relay node directly connected to the third relay node, and the relay node directly connected to the third relay node has no associated station, the information about the device connected to the third relay node further includes an LQI of the third relay node.

The relay node provided in Embodiment 6 of this application may perform any data transmission method in FIG. 2 to FIG. 8. For a specific implementation process and beneficial effects, refer to the foregoing descriptions. Details are not described herein again.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, or a network device) or a processor (processor) to perform all or some of the steps of the methods described in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. A data transmission method, comprising:
receiving, by a first relay node, data;
determining (S202), by the first relay node, a target station of the data based on information about a neighboring node of the first relay node, wherein the information about the neighboring node of the first relay node further comprises information about a second relay node directly connected to the first relay node, and the information about the second relay node comprises information about all stations associated with the second relay node; and
sending, by the first relay node, the data to the target station, wherein the sending, by the first relay node, the data to the target station comprises sending, by the first relay node, the data to the second relay node if the target station is a station associated with the second relay node, so that the second relay node sends the data to the target station; and wherein
before the first relay node determines the target station of the data based on the information about the neighboring node of the first relay node, the method further comprises:
sending (S301), by the first relay node, a first connection request to the second relay node, comprising determining (S701) by the first relay node, based on a direct connection capability information element of the second relay node, whether the first relay node and the second relay node are matched for connection, and sending (S702), by the first relay node, the first connection request to the second relay node if the first relay node and the second relay node are matched for connection; and
being **characterised by** the direct connection capability information element comprises a direct connection permit identifier of the second relay node, a quantity of relay nodes that are permitted to be directly connected to the second relay node, and a quantity of relay nodes that have been directly connected to the second relay node; and before the sending, by the first relay node, the connection request to the second relay node if the first relay node and the second relay node are matched for connection, the method further comprises:
determining, by the first relay node if the first relay node determines, based on the direct connection permit identifier of the second relay node, that the second relay node is permitted to be directly connected, and the quantity of relay nodes that are permitted to be directly connected to the second relay node is greater than the quantity of relay nodes that have been directly connected to the second relay node, that the first relay node and the second relay node are matched for connection.

2. The method according to claim 1, wherein the direct connection capability information element comprises a transmission rate of the second relay node; and
the determining, by the first relay node if the first relay node determines, based on the direct connection permit identifier of the second relay node, that the second relay node is permitted to be directly connected, and the quantity of relay nodes that are permitted to be directly connected to the second relay node is greater than the quantity of relay nodes that have been directly connected to the second relay node, that the first relay node and the second relay node are matched for connection comprises:
if the first relay node determines, based on the direct connection permit identifier of the second relay node, that the second relay node is permitted to be directly connected, the quantity of relay nodes that are permitted to be directly connected to the second relay node is greater than the quantity of relay nodes that have been directly connected to the second relay node, and a transmission rate difference is within a preset range, determining, by the first relay node, that the first relay node and the second relay node are matched for connection, wherein the transmission rate difference is a difference between a transmission rate of the first relay node and the transmission rate of the second relay node.

3. The method according to any one of claims 1 to 2, wherein the information about the second relay node further comprises attribute information of the second relay node;
the attribute information of the second relay node comprises an identifier of a first attribute type and information about a device connected to the second relay node, and the device connected to the second relay node comprises a station associated with the second relay node and/or a relay node directly connected to the second relay node.

4. The method according to claim 3, wherein the information about the device connected to the second relay node comprises a Medium Access Control MAC address of the device connected to the second relay node, a depth of the device connected to the second relay node, and a type of the device connected to the second relay node;
the type of the device connected to the second relay node is used to indicate that the device connected to the second relay node is the station associated with the second relay node or the relay node directly connected to the second relay node; and
if the type of the device connected to the second relay node is used to indicate that the device connected to the second relay node is a relay node directly connected to the neighboring relay node, the information about the device connected to the second relay node further comprises link transmission quality LQI of the second relay node.

5. The method according to any one of claims 1 to 2, wherein the information about the second relay node further comprises attribute information of a relay group to which the second relay node belongs, the attribute information of the relay group to which the second relay node belongs comprises an identifier of a second attribute type, a MAC address of a third relay node directly connected to the second relay node, and information about a device connected to the third relay node, and the device connected to the third relay node comprises a station associated with the third relay node and/or a relay node directly connected to the third relay node.

6. The method according to claim 5, wherein the information about the device connected to the third relay node comprises a MAC address of the device connected to the third relay node, a depth of the device connected to the third relay node, and a type of the device connected to the third relay node;
the type of the device connected to the third relay node is used to indicate that the device connected to the third relay node is the station associated with the third relay node or the relay node directly connected to the third relay node; and
if the type of the device connected to the third relay node is used to indicate that the device connected to the third relay node is the relay node directly connected to the third relay node, and the relay node directly connected to the third relay node has no associated station, the information about the device connected to the third relay node further comprises an LQI of the third relay node.

7. A first relay node, comprising a receiver, a processor, and a transmitter, wherein the receiver is connected to the processor, and the processor is further connected to the transmitter;
the receiver is configured to receive data;
the processor is configured to determine a target station of the data based on information about a neighboring node of the first relay node, wherein the information about the neighboring node of the first relay node further comprises information about a second relay node directly connected to the first relay node, and the information about the second relay node comprises information about all stations associated with the second relay node;
wherein, the first relay node is configured to determine based on a direct connection capability information element of the second relay node whether the first relay node and the second relay node are matched for connection, and if the first relay node and the second relay node are matched for connection the first relay node is configured to send a first connection request to the second relay node; and
the transmitter is configured to send the data to the target station, wherein the transmitter is specifically configured to send the data to the second relay node if the target station is a station associated with the second relay node, so that the second relay node sends the data to the target station; and
being **characterised by** the direct connection capability information element comprises a direct connection permit identifier of the second relay node, a quantity of relay nodes that are permitted to be directly connected to the second relay node, and a quantity of relay nodes that have been directly connected to the second relay node; and
the processor is specifically configured to: if determining, based on the direct connection permit identifier of the second relay node, that the second relay node is permitted to be directly connected, and the quantity of relay nodes that are permitted to be directly connected to the second relay node is greater than the quantity of relay nodes that have been directly connected to the second relay node, determine that the first relay node and the second relay node are matched for connection.

8. The first relay node according to claim 7, wherein the direct connection capability information element comprises a transmission rate of the second relay node; and
the processor is specifically configured to: if determining, based on the direct connection permit identifier of the second relay node, that the second relay node is permitted to be directly connected, the quantity of relay nodes that are permitted to be directly connected to the second relay node is greater than the quantity of relay nodes that have been directly connected to the second relay node, and a transmission rate difference is within a preset range, determine that the first relay node and the second relay node are matched for connection, wherein the transmission rate difference is a difference between a transmission rate of the first relay node and the transmission rate of the second relay node.

9. The relay node according to any one of claims 7 to 8, wherein the information about the second relay node further comprises attribute information of the second relay node;
the attribute information of the second relay node comprises an identifier of a first attribute type and information about a device connected to the second relay node, and the device connected to the second relay node comprises a station associated with the second relay node and/or a relay node directly connected to the second relay node.

10. The relay node according to claim 8, wherein the information about the device connected to the second relay node comprises a Medium Access Control MAC address of the device connected to the second relay node, a depth of the device connected to the second relay node, and a type of the device connected to the second relay node;
the type of the device connected to the second relay node is used to indicate that the device connected to the second relay node is the station associated with the second relay node or the relay node directly connected to the second relay node; and
if the type of the device connected to the second relay node is used to indicate that the device connected to the second relay node is a relay node directly connected to the neighboring relay node, the information about the device connected to the second relay node further comprises link transmission quality LQI of the second relay node.

11. The relay node according to any one of claims 7 to 8, wherein the information about the second relay node further comprises attribute information of a relay group to which the second relay node belongs, the attribute information of the relay group to which the second relay node belongs comprises an identifier of a second attribute type, a MAC address of a third relay node directly connected to the second relay node, and information about a device connected to the third relay node, and the device connected to the third relay node comprises a station associated with the third relay node and/or a relay node directly connected to the third relay node.

12. The relay node according to claim 11, wherein the information about the device connected to the third relay node comprises a MAC address of the device connected to the third relay node, a depth of the device connected to the third relay node, and a type of the device connected to the third relay node;
the type of the device connected to the third relay node is used to indicate that the device connected to the third relay node is the station associated with the third relay node or the relay node directly connected to the third relay node; and
if the type of the device connected to the third relay node is used to indicate that the device connected to the third relay node is the relay node directly connected to the third relay node, and the relay node directly connected to the third relay node has no associated station, the information about the device connected to the third relay node further comprises an LQI of the third relay node.

13. A computer-readable medium on which a program is recorded, wherein the program, when executed, enables a computer to perform the method of any one of claims 1 to 6.

## Patentansprüche

1. Datenübertragungsverfahren, umfassend:
Empfangen von Daten durch einen ersten Relaisknoten;
Bestimmen (S202), durch den ersten Relaisknoten, einer Zielstation der Daten basierend auf Informationen über einen benachbarten Knoten des ersten Relaisknotens, wobei die Informationen über den benachbarten Knoten des ersten Relaisknotens ferner Informationen über einen zweiten Relaisknoten umfassen, der direkt mit dem ersten Relaisknoten verbunden ist, und die Informationen über den zweiten Relaisknoten Informationen über alle Stationen umfassen, die dem zweiten Relaisknoten zugeordnet sind; und
Senden, durch den ersten Relaisknoten, der Daten an die Zielstation, wobei das Senden, durch den ersten Relaisknoten, der Daten an die Zielstation das Senden, durch den ersten Relaisknoten, der Daten an den zweiten Relaisknoten umfasst, wenn die Zielstation eine Station ist, die dem zweiten Relaisknoten zugeordnet ist, sodass der zweite Relaisknoten die Daten an die Zielstation sendet; und wobei
bevor der erste Relaisknoten die Zielstation der Daten basierend auf den Informationen über den benachbarten Knoten des ersten Relaisknotens bestimmt, das Verfahren ferner Folgendes umfasst:
Senden (S301), durch den ersten Relaisknoten, einer ersten Verbindungsanforderung an den zweiten Relaisknoten, umfassend Bestimmen (S701), durch den ersten Relaisknoten, basierend auf einem Direktverbindungsfähigkeitsinformationselement des zweiten Relaisknotens, ob der erste Relaisknoten und der zweite Relaisknoten für Verbindung übereinstimmen, und Senden (S702), durch den ersten Relaisknoten, der ersten Verbindungsanforderung an den zweiten Relaisknoten, wenn der erste Relaisknoten und der zweite Relaisknoten für Verbindung übereinstimmen; und
**dadurch gekennzeichnet, dass**
das Direktverbindungsfähigkeitsinformationselement eine Direktverbindungszulassungskennung des zweiten Relaisknotens, eine Menge an Relaisknoten, die direkt mit dem zweiten Relaisknoten verbunden werden darf, und eine Menge an Relaisknoten umfasst, die direkt mit dem zweiten Relaisknoten verbunden worden ist; und vor dem Senden, durch den ersten Relaisknoten, der Verbindungsanforderung an den zweiten Relaisknoten, wenn der erste Relaisknoten und der zweite Relaisknoten für Verbindung übereinstimmen, das Verfahren ferner Folgendes umfasst:
Bestimmen, durch den ersten Relaisknoten, wenn der erste Relaisknoten bestimmt, basierend auf der Direktverbindungszulassungskennung des zweiten Relaisknotens, dass der zweite Relaisknoten direkt verbunden werden darf, und die Menge an Relaisknoten, die direkt mit dem zweiten Relaisknoten verbunden werden darf, größer ist als die Menge an Relaisknoten, die direkt mit dem zweiten Relaisknoten verbunden worden ist, dass der erste Relaisknoten und der zweite Relaisknoten für Verbindung übereinstimmen.

2. Verfahren nach Anspruch 1, wobei das Direktverbindungsfähigkeitsinformationselement eine Übertragungsrate des zweiten Relaisknotens umfasst; und
das Bestimmen, durch den ersten Relaisknoten, wenn der erste Relaisknoten bestimmt, basierend auf der Direktverbindungszulassungskennung des zweiten Relaisknotens, dass der zweite Relaisknoten direkt verbunden werden darf, und die Menge an Relaisknoten, die direkt mit dem zweiten Relaisknoten verbunden werden darf, größer ist als die Menge an Relaisknoten, die direkt mit dem zweiten Relaisknoten verbunden worden ist, dass der erste Relaisknoten und der zweite Relaisknoten für Verbindung übereinstimmen, Folgendes umfasst:
wenn der erste Relaisknoten bestimmt, basierend auf der Direktverbindungszulassungskennung des zweiten Relaisknotens, dass der zweite Relaisknoten direkt verbunden werden darf, die Menge an Relaisknoten, die direkt mit dem zweiten Relaisknoten verbunden werden darf, größer ist als die Menge an Relaisknoten, die direkt mit dem zweiten Relaisknoten verbunden worden ist, und eine Übertragungsratendifferenz innerhalb eines voreingestellten Bereichs liegt, Bestimmen, durch den ersten Relaisknoten, dass der erste Relaisknoten und der zweite Relaisknoten für Verbindung übereinstimmen, wobei die Übertragungsratendifferenz eine Differenz zwischen einer Übertragungsrate des ersten Relaisknotens und der Übertragungsrate des zweiten Relaisknotens ist.

3. Verfahren nach einem der Ansprüche 1 bis 2, wobei die Informationen über den zweiten Relaisknoten ferner Attributinformationen des zweiten Relaisknotens umfassen;
die Attributinformationen des zweiten Relaisknotens eine Kennung eines ersten Attributtyps und Informationen über eine Vorrichtung umfassen, die mit dem zweiten Relaisknoten verbunden ist, und die Vorrichtung, die mit dem zweiten Relaisknoten verbunden ist, eine Station umfasst, die dem zweiten Relaisknoten zugeordnet ist, und/oder einen Relaisknoten, der direkt mit dem zweiten Relaisknoten verbunden ist.

4. Verfahren nach Anspruch 3, wobei die Informationen über die Vorrichtung, die mit dem zweiten Relaisknoten verbunden ist, eine Medium-Access-Control-MAC-Adresse der Vorrichtung, die mit dem zweiten Relaisknoten verbunden ist, eine Tiefe der Vorrichtung, die mit dem zweiten Relaisknoten verbunden ist, und einen Typ der Vorrichtung umfassen, die mit dem zweiten Relaisknoten verbunden ist;
der Typ der Vorrichtung, die mit dem zweiten Relaisknoten verbunden ist, verwendet wird, um anzuzeigen, dass die Vorrichtung, die mit dem zweiten Relaisknoten verbunden ist, die Station ist, die dem zweiten Relaisknoten zugeordnet ist, oder der Relaisknoten, der direkt mit dem zweiten Relaisknoten verbunden ist; und
wenn der Typ der Vorrichtung, die mit dem zweiten Relaisknoten verbundene ist, verwendet wird, um anzuzeigen, dass die Vorrichtung, die mit dem zweiten Relaisknoten verbunden ist, ein Relaisknoten ist, der direkt mit dem benachbarten Relaisknoten verbunden ist, die Informationen über die Vorrichtung, die mit dem zweiten Relaisknoten verbunden sind, ferner Verbindungsübertragungsqualität, LQI, des zweiten Relaisknotens umfassen.

5. Verfahren nach einem der Ansprüche 1 bis 2, wobei die Informationen über den zweiten Relaisknoten ferner Attributinformationen einer Relaisgruppe umfassen, zu welcher der zweite Relaisknoten gehört, die Attributinformationen der Relaisgruppe, zu welcher der zweite Relaisknoten gehört, eine Kennung eines zweiten Attributtyps, eine MAC-Adresse eines dritten Relaisknotens, der direkt mit dem zweiten Relaisknoten verbunden ist, und Informationen über eine Vorrichtung umfassen, die mit dem dritten Relaisknoten verbunden ist, und die Vorrichtung, die mit dem dritten Relaisknoten verbunden ist, eine Station umfasst, die dem dritten Relaisknoten zugeordnet ist, und/oder einen Relaisknoten, der direkt mit dem dritten Relaisknoten verbunden ist.

6. Verfahren nach Anspruch 5, wobei die Informationen über die Vorrichtung, die mit dem dritten Relaisknoten verbunden ist, eine MAC-Adresse der Vorrichtung, die mit dem dritten Relaisknoten verbunden ist, eine Tiefe der Vorrichtung, die mit dem dritten Relaisknoten verbunden ist, und einen Typ der Vorrichtung umfassen, die mit dem dritten Relaisknoten verbunden ist;
der Typ der Vorrichtung, die mit dem dritten Relaisknoten verbunden ist, verwendet wird, um anzuzeigen, dass die Vorrichtung, die mit dem dritten Relaisknoten verbunden ist, die Station ist, die dem dritten Relaisknoten zugeordnet ist, oder der Relaisknoten, der direkt mit dem dritten Relaisknoten verbunden ist; und
wenn der Typ der Vorrichtung, die mit dem dritten Relaisknoten verbunden ist, verwendet wird, um anzuzeigen, dass die Vorrichtung, die mit dem dritten Relaisknoten verbunden ist, der Relaisknoten ist, der direkt mit dem dritten Relaisknoten verbunden ist, und der Relaisknoten, der direkt mit dem dritten Relaisknoten verbunden ist, keine zugeordnete Station aufweist, die Informationen über die Vorrichtung, die mit dem dritten Relaisknoten verbunden ist, ferner eine LQI des dritten Relaisknotens umfassen.

7. Erster Relaisknoten, der einen Empfänger, einen Prozessor und einen Sender umfasst, wobei der Empfänger mit dem Prozessor verbunden ist und der Prozessor ferner mit dem Sender verbunden ist;
der Empfänger konfiguriert ist, um Daten zu empfangen;
der Prozessor konfiguriert ist, um eine Zielstation der Daten basierend auf Informationen über einen benachbarten Knoten des ersten Relaisknotens zu bestimmen, wobei die Informationen über den benachbarten Knoten des ersten Relaisknotens ferner Informationen über einen zweiten Relaisknoten umfassen, der direkt mit dem ersten Relaisknoten verbunden ist, und die Informationen über den zweiten Relaisknoten Informationen über alle Stationen umfassen, die dem zweiten Relaisknoten zugeordnet sind;
wobei der erste Relaisknoten konfiguriert ist, um basierend auf einem Direktverbindungsfähigkeitsinformationselement des zweiten Relaisknotens zu bestimmen, ob der erste Relaisknoten und der zweite Relaisknoten für Verbindung übereinstimmen, und wenn der erste Relaisknoten und der zweite Relaisknoten für Verbindung übereinstimmen, der erste Relaisknoten konfiguriert ist, um eine erste Verbindungsanforderung an den zweiten Relaisknoten zu senden; und
der Sender konfiguriert ist, um die Daten an die Zielstation zu senden, wobei der Sender speziell konfiguriert ist, um die Daten an den zweiten Relaisknoten zu senden, wenn die Zielstation eine Station ist, die dem zweiten Relaisknoten zugeordnet ist, sodass der zweite Relaisknoten die Daten an die Zielstation sendet; und **dadurch gekennzeichnet, dass**
das Direktverbindungsfähigkeitsinformationselement eine Direktverbindungszulassungskennung des zweiten Relaisknotens, eine Menge an Relaisknoten, die direkt mit dem zweiten Relaisknoten verbunden werden darf, und eine Menge an Relaisknoten umfasst, die direkt mit dem zweiten Relaisknoten verbunden worden ist; und der Prozessor speziell für Folgendes konfiguriert ist: wenn bestimmt wird, basierend auf der Direktverbindungszulassungskennung des zweiten Relaisknotens, dass der zweite Relaisknoten direkt verbunden werden darf, und die Menge an Relaisknoten, die direkt mit dem zweiten Relaisknoten verbunden werden darf, größer ist als die Menge an Relaisknoten, die direkt mit dem zweiten Relaisknoten verbunden worden ist, Bestimmen, dass der erste Relaisknoten und der zweite Relaisknoten für Verbindung übereinstimmen.

8. Erster Relaisknoten nach Anspruch 7, wobei das Direktverbindungsfähigkeitsinformationselement eine Übertragungsrate des zweiten Relaisknotens umfasst; und
der Prozessor speziell für Folgendes konfiguriert ist: wenn bestimmt wird, basierend auf der Direktverbindungszulassungskennung des zweiten Relaisknotens, dass der zweite Relaisknoten direkt verbunden werden darf, die Menge an Relaisknoten, die direkt mit dem zweiten Relaisknoten verbunden werden darf, größer ist als die Menge an Relaisknoten, die direkt mit dem zweiten Relaisknoten verbunden worden ist, und eine Übertragungsratendifferenz innerhalb eines voreingestellten Bereichs liegt, Bestimmen, dass der erste Relaisknoten und der zweite Relaisknoten für Verbindung übereinstimmen, wobei die Übertragungsratendifferenz eine Differenz zwischen einer Übertragungsrate des ersten Relaisknotens und der Übertragungsrate des zweiten Relaisknotens ist.

9. Relaisknoten nach einem der Ansprüche 7 bis 8, wobei die Informationen über den zweiten Relaisknoten ferner Attributinformationen des zweiten Relaisknotens umfassen;
die Attributinformationen des zweiten Relaisknotens eine Kennung eines ersten Attributtyps und Informationen über eine Vorrichtung umfassen, die mit dem zweiten Relaisknoten verbunden ist, und die Vorrichtung, die mit dem zweiten Relaisknoten verbunden ist, eine Station umfasst, die dem zweiten Relaisknoten zugeordnet ist, und/oder einen Relaisknoten, der direkt mit dem zweiten Relaisknoten verbunden ist.

10. Relaisknoten nach Anspruch 8, wobei die Informationen über die Vorrichtung, die mit dem zweiten Relaisknoten verbunden ist, eine Medium-Access-Control-MAC-Adresse der Vorrichtung, die mit dem zweiten Relaisknoten verbunden ist, eine Tiefe der Vorrichtung, die mit dem zweiten Relaisknoten verbunden ist, und einen Typ der Vorrichtung umfassen, die mit dem zweiten Relaisknoten verbunden ist;
der Typ der Vorrichtung, die mit dem zweiten Relaisknoten verbunden ist, verwendet wird, um anzuzeigen, dass die Vorrichtung, die mit dem zweiten Relaisknoten verbunden ist, die Station ist, die dem zweiten Relaisknoten zugeordnet ist, oder der Relaisknoten, der direkt mit dem zweiten Relaisknoten verbunden ist; und
wenn der Typ der Vorrichtung, die mit dem zweiten Relaisknoten verbundene ist, verwendet wird, um anzuzeigen, dass die Vorrichtung, die mit dem zweiten Relaisknoten verbunden ist, ein Relaisknoten ist, der direkt mit dem benachbarten Relaisknoten verbunden ist, die Informationen über die Vorrichtung, die mit dem zweiten Relaisknoten verbunden sind, ferner Verbindungsübertragungsqualität, LQI, des zweiten Relaisknotens umfassen.

11. Relaisknoten nach einem der Ansprüche 7 bis 8, wobei die Informationen über den zweiten Relaisknoten ferner Attributinformationen einer Relaisgruppe umfassen, zu welcher der zweite Relaisknoten gehört, die Attributinformationen der Relaisgruppe, zu welcher der zweite Relaisknoten gehört, eine Kennung eines zweiten Attributtyps, eine MAC-Adresse eines dritten Relaisknotens, der direkt mit dem zweiten Relaisknoten verbunden ist, und Informationen über eine Vorrichtung umfassen, die mit dem dritten Relaisknoten verbunden ist, und die Vorrichtung, die mit dem dritten Relaisknoten verbunden ist, eine Station umfasst, die dem dritten Relaisknoten zugeordnet ist, und/oder einen Relaisknoten, der direkt mit dem dritten Relaisknoten verbunden ist.

12. Relaisknoten nach Anspruch 11, wobei die Informationen über die Vorrichtung, die mit dem dritten Relaisknoten verbunden ist, eine MAC-Adresse der Vorrichtung, die mit dem dritten Relaisknoten verbunden ist, eine Tiefe der Vorrichtung, die mit dem dritten Relaisknoten verbunden ist, und einen Typ der Vorrichtung umfassen, die mit dem dritten Relaisknoten verbunden ist;
der Typ der Vorrichtung, die mit dem dritten Relaisknoten verbunden ist, verwendet wird, um anzuzeigen, dass die Vorrichtung, die mit dem dritten Relaisknoten verbunden ist, die Station ist, die dem dritten Relaisknoten zugeordnet ist, oder der Relaisknoten, der direkt mit dem dritten Relaisknoten verbunden ist; und
wenn der Typ der Vorrichtung, die mit dem dritten Relaisknoten verbunden ist, verwendet wird, um anzuzeigen, dass die Vorrichtung, die mit dem dritten Relaisknoten verbunden ist, der Relaisknoten ist, der direkt mit dem dritten Relaisknoten verbunden ist, und der Relaisknoten, der direkt mit dem dritten Relaisknoten verbunden ist, keine zugeordnete Station aufweist, die Informationen über die Vorrichtung, die mit dem dritten Relaisknoten verbunden ist, ferner eine LQI des dritten Relaisknotens umfassen.

13. Computerlesbares Medium, auf dem ein Programm aufgezeichnet ist, wobei das Programm, wenn es ausgeführt wird, einem Computer ermöglicht, das Verfahren nach einem der Ansprüche 1 bis 6 durchzuführen.

## Revendications

1. Procédé de transmission de données, comprenant :
la réception, par un premier nœud relais, de données.
la détermination (S202), par le premier nœud relais, d'une station cible des données sur la base d'informations concernant un nœud voisin du premier nœud relais, dans lequel les informations concernant le nœud voisin du premier nœud relais comprennent en outre des informations concernant un deuxième nœud relais directement connecté au premier nœud relais, et les informations concernant le deuxième nœud relais comprennent des informations concernant toutes les stations associées au deuxième nœud relais ; et
l'envoi, par le premier nœud relais, des données à la station cible, dans lequel l'envoi, par le premier nœud relais, des données à la station cible comprend l'envoi, par le premier nœud relais, des données au deuxième nœud relais si la station cible est une station associée au deuxième nœud relais, de sorte que le deuxième nœud relais envoie les données à la station cible ; et dans lequel avant que le premier nœud relais ne détermine la station cible des données sur la base des informations concernant le nœud voisin du premier nœud relais, le procédé comprend en outre :
l'envoi (S301), par le premier nœud relais, d'une première demande de connexion au deuxième nœud relais, comprenant le fait de déterminer (S701) par le premier nœud relais, sur la base d'un élément d'information de capacité de connexion directe du deuxième nœud relais, si le premier nœud relais et le deuxième nœud relais sont appariés pour une connexion, et l'envoi (S702), par le premier nœud relais, de la première demande de connexion au deuxième nœud relais si le premier nœud relais et le deuxième nœud relais sont appariés pour une connexion ; et
**caractérisé par** :
l'élément d'information de capacité de connexion directe comprend un identifiant d'autorisation de connexion directe du deuxième nœud relais, une quantité de nœuds relais qui sont autorisés à être directement connectés au deuxième nœud relais, et une quantité de nœuds relais qui ont été directement connectés au deuxième nœud relais ; et avant l'envoi, par le premier nœud relais, de la demande de connexion au deuxième nœud relais si le premier nœud relais et le deuxième nœud relais sont appariés pour une connexion,
le procédé comprend en outre :
la détermination, par le premier nœud relais si le premier nœud relais détermine, sur la base de l'identifiant d'autorisation de connexion directe du deuxième nœud relais, que le deuxième nœud relais est autorisé à être directement connecté, et que la quantité de nœuds relais qui sont autorisés à être directement connectés au deuxième nœud relais est supérieure à la quantité de nœuds relais qui ont été directement connectés au deuxième nœud relais, du fait que le premier nœud relais et le deuxième nœud relais sont appariés pour une connexion.

2. Procédé selon la revendication 1, dans lequel l'élément d'information de capacité de connexion directe comprend un débit de transmission du deuxième nœud relais ; et
la détermination, par le premier nœud relais si le premier nœud relais détermine, sur la base de l'identifiant d'autorisation de connexion directe du deuxième nœud relais, que le deuxième nœud relais est autorisé à être directement connecté, et que la quantité de nœuds relais qui sont autorisés à être directement connectés au deuxième nœud relais est supérieure à la quantité de nœuds relais qui ont été directement connectés au deuxième nœud relais, du fait que le premier nœud relais et le deuxième nœud relais sont appariés pour une connexion comprend :
si le premier nœud relais détermine, sur la base de l'identifiant d'autorisation de connexion directe du deuxième nœud relais, que le deuxième nœud relais est autorisé à être directement connecté, que la quantité de nœuds relais qui sont autorisés à être directement connectés au deuxième nœud relais est supérieure à la quantité de nœuds relais qui ont été directement connectés au deuxième nœud relais, et qu'une différence de débit de transmission se situe dans une plage prédéfinie, la détermination, par le premier nœud relais, du fait que le premier nœud relais et le deuxième nœud relais sont appariés pour une connexion, dans lequel la différence de débit de transmission est une différence entre un débit de transmission du premier nœud relais et le débit de transmission du deuxième nœud relais.

3. Procédé selon l'une quelconque des revendications 1 à 2, dans lequel les informations concernant le deuxième nœud relais comprennent en outre des informations d'attribut du deuxième nœud relais ;
les informations d'attribut du deuxième nœud relais comprennent un identifiant d'un premier type d'attribut et des informations concernant un dispositif connecté au deuxième nœud relais, et le dispositif connecté au deuxième nœud relais comprend une station associée au deuxième nœud relais et/ou un nœud relais directement connecté au deuxième nœud relais.

4. Procédé selon la revendication 3, dans lequel les informations concernant le dispositif connecté au deuxième nœud relais comprennent une adresse de contrôle d'accès au support MAC du dispositif connecté au deuxième nœud relais, une profondeur du dispositif connecté au deuxième nœud relais et un type du dispositif connecté au deuxième nœud relais ;
le type du dispositif connecté au deuxième nœud relais est utilisé pour indiquer que le dispositif connecté au deuxième nœud relais est la station associée au deuxième nœud relais ou le nœud relais directement connecté au deuxième nœud relais ; et
si le type du dispositif connecté au deuxième nœud relais est utilisé pour indiquer que le dispositif connecté au deuxième nœud relais est un nœud relais directement connecté au nœud relais voisin, les informations concernant le dispositif connecté au deuxième nœud relais comprennent en outre une qualité de transmission de liaison LQI du deuxième nœud relais.

5. Procédé selon l'une quelconque des revendications 1 à 2, dans lequel les informations concernant le deuxième nœud relais comprennent en outre des informations d'attribut d'un groupe relais auquel appartient le deuxième nœud relais, les informations d'attribut du groupe relais auquel appartient le deuxième nœud relais comprennent un identifiant d'un second type d'attribut, une adresse MAC d'un troisième nœud relais directement connecté au deuxième nœud relais, et des informations concernant un dispositif connecté au troisième nœud relais, et le dispositif connecté au troisième nœud relais comprend une station associée au troisième nœud relais et/ou un nœud relais directement connecté au troisième nœud relais.

6. Procédé selon la revendication 5, dans lequel les informations concernant le dispositif connecté au troisième nœud relais comprennent une adresse MAC du dispositif connecté au troisième nœud relais, une profondeur du dispositif connecté au troisième nœud relais et un type du dispositif connecté au troisième nœud relais ; le type du dispositif connecté au troisième nœud relais est utilisé pour indiquer que le dispositif connecté au troisième nœud relais est la station associée au troisième nœud relais ou le nœud relais directement connecté au troisième nœud relais ; et
si le type du dispositif connecté au troisième nœud relais est utilisé pour indiquer que le dispositif connecté au troisième nœud relais est le nœud relais directement connecté au troisième nœud relais, et le nœud relais directement connecté au troisième nœud relais n'a pas de station associée, les informations concernant le dispositif connecté au troisième nœud relais comprennent en outre une LQI du troisième nœud relais.

7. Premier nœud relais, comprenant un récepteur, un processeur et un émetteur, dans lequel le récepteur est connecté au processeur, et le processeur est en outre connecté à l'émetteur ;
le récepteur est configuré pour recevoir des données ;
le processeur est configuré pour déterminer une station cible des données sur la base d'informations concernant un nœud voisin du premier nœud relais, dans lequel les informations concernant le nœud voisin du premier nœud relais comprennent en outre des informations concernant un deuxième nœud relais directement connecté au premier nœud relais, et les informations concernant le deuxième nœud relais comprennent des informations concernant toutes les stations associées au deuxième nœud relais ; et
dans lequel, le premier nœud relais est configuré pour déterminer, sur la base d'un élément d'information de capacité de connexion directe du deuxième nœud relais, si le premier nœud relais et le deuxième nœud relais sont appariés pour une connexion, et si le premier nœud relais et le deuxième nœud relais sont appariés pour une connexion, le premier nœud relais est configuré pour envoyer une première demande de connexion au deuxième nœud relais ; et l'émetteur est configuré pour envoyer les données à la station cible, dans lequel l'émetteur est spécifiquement configuré pour envoyer les données au deuxième nœud relais si la station cible est une station associée au deuxième nœud relais, de sorte que le deuxième nœud relais envoie les données à la station cible ; et **caractérisé par** :
l'élément d'information de capacité de connexion directe comprend un identifiant d'autorisation de connexion directe du deuxième nœud relais, une quantité de nœuds relais qui sont autorisés à être directement connectés au deuxième nœud relais, et une quantité de nœuds relais qui ont été directement connectés au deuxième nœud relais ; et
le processeur est spécifiquement configuré pour : s'il détermine, sur la base de l'identifiant d'autorisation de connexion directe du deuxième nœud relais, que le deuxième nœud relais est autorisé à être directement connecté, et que la quantité de nœuds relais qui sont autorisés à être directement connectés au deuxième nœud relais est supérieure à la quantité de nœuds relais qui ont été directement connectés au deuxième nœud relais, déterminer que le premier nœud relais et le deuxième nœud relais sont appariés pour une connexion.

8. Premier nœud relais selon la revendication 7, dans lequel l'élément d'information de capacité de connexion directe comprend un débit de transmission du deuxième nœud relais ; et
le processeur est spécifiquement configuré pour : s'il détermine, sur la base de l'identifiant d'autorisation de connexion directe du deuxième nœud relais, que le deuxième nœud relais est autorisé à être directement connecté, que la quantité de nœuds relais qui sont autorisés à être directement connectés au deuxième nœud relais est supérieure à la quantité de nœuds relais qui ont été directement connectés au deuxième nœud relais, et qu'une différence de débit de transmission se situe dans une plage prédéfini, déterminer que le premier nœud relais et le deuxième nœud relais sont appariés pour une connexion, dans lequel la différence de débit de transmission est une différence entre un débit de transmission du premier nœud relais et le débit de transmission du deuxième nœud relais.

9. Nœud relais selon l'une quelconque des revendications 7 à 8, dans lequel les informations concernant le deuxième nœud relais comprennent en outre des informations d'attribut du deuxième nœud relais ;
les informations d'attribut du deuxième nœud relais comprennent un identifiant d'un premier type d'attribut et des informations concernant un dispositif connecté au deuxième nœud relais, et le dispositif connecté au deuxième nœud relais comprend une station associée au deuxième nœud relais et/ou un nœud relais directement connecté au deuxième nœud relais.

10. Nœud relais selon la revendication 8, dans lequel les informations concernant le dispositif connecté au deuxième nœud relais comprennent une adresse de contrôle d'accès au support MAC du dispositif connecté au deuxième nœud relais, une profondeur du dispositif connecté au deuxième nœud relais et un type du dispositif connecté au deuxième nœud relais ;
le type du dispositif connecté au deuxième nœud relais est utilisé pour indiquer que le dispositif connecté au deuxième nœud relais est la station associée au deuxième nœud relais ou le nœud relais directement connecté au deuxième nœud relais ; et
si le type du dispositif connecté au deuxième nœud relais est utilisé pour indiquer que le dispositif connecté au deuxième nœud relais est un nœud relais directement connecté au nœud relais voisin, les informations concernant le dispositif connecté au deuxième nœud relais comprennent en outre une qualité de transmission de liaison LQI du deuxième nœud relais.

11. Nœud relais selon l'une quelconque des revendications 7 à 8, dans lequel les informations concernant le deuxième nœud relais comprennent en outre des informations d'attribut d'un groupe relais auquel appartient le deuxième nœud relais, les informations d'attribut du groupe relais auquel appartient le deuxième nœud relais comprennent un identifiant d'un second type d'attribut, une adresse MAC d'un troisième nœud relais directement connecté au deuxième nœud relais, et des informations concernant un dispositif connecté au troisième nœud relais, et le dispositif connecté au troisième nœud relais comprend une station associée au troisième nœud relais et/ou un nœud relais directement connecté au troisième nœud relais.

12. Nœud relais selon la revendication 11, dans lequel les informations concernant le dispositif connecté au troisième nœud relais comprennent une adresse MAC du dispositif connecté au troisième nœud relais, une profondeur du dispositif connecté au troisième nœud relais et un type du dispositif connecté au troisième nœud relais ;
le type du dispositif connecté au troisième nœud relais est utilisé pour indiquer que le dispositif connecté au troisième nœud relais est la station associée au troisième nœud relais ou le nœud relais directement connecté au troisième nœud relais ; et
si le type du dispositif connecté au troisième nœud relais est utilisé pour indiquer que le dispositif connecté au troisième nœud relais est le nœud relais directement connecté au troisième nœud relais, et le nœud relais directement connecté au troisième nœud relais n'a pas de station associée, les informations concernant le dispositif connecté au troisième nœud relais comprennent en outre une LQI du troisième nœud relais.

13. Support lisible par ordinateur sur lequel un programme est enregistré, dans lequel le programme, lorsqu'il est exécuté, permet à un ordinateur d'exécuter le procédé selon l'une quelconque des revendications 1 à 6.
